# EUROPÄISCHE PATENTANMELDUNG

(11) **EP 4 467 728 A1**
(43) Veröffentlichungstag der Anmeldung: **27.11.2024**
(21) Anmeldenummer: 24174047.1
(22) Anmeldetag: 03.05.2024
(51) Int. Cl.: E02F 9/08

(54) **KETTENFAHRZEUG**

(30) Priorität: 25.05.2023 US 202318324067
(71) Anmelder: Kässbohrer Geländefahrzeug AG, 88471 Laupheim (DE)
(72) Erfinder: Bröckel, Patrick, 72535 Heroldstatt (DE); Hecht, Stefan, 88422 Tiefenbach (DE); Reger, Christian, 89584 Ehingen (DE); Ströbele, Roman, 89195 Staig (DE)
(74) Vertreter: Patentanwälte Ruff, Wilhelm, Beier, Dauster & Partner mbB

(57) **Zusammenfassung**

Es ist hier ein Kettenfahrzeug vorgesehen. In einem Beispiel umfasst ein Kettenfahrzeug ein sich entlang einer Längsrichtung des Kettenfahrzeugs erstreckendes Fahrgestell, wobei das Fahrgestell eine Vielzahl von Rahmenelementen umfasst, die sich jeweils entlang der Längsrichtung erstrecken; eine mit dem Fahrgestell gekoppelt Fahrerkabine; ein eine Kraftmaschine umfassendes Antriebsaggregat, das mit dem Fahrgestell gekoppelt ist und in einem Antriebsaggregatgehäuse untergebracht ist, das eine Vielzahl von Wartungsklappen umfasst, wobei das Antriebsaggregatgehäuse einen seitlichen Teil und einen hinteren Teil umfasst, wobei ein vorderer Abschnitt des seitlichen Teils mit einen abfallenden Winkel ausgeführt ist; und ein Paar von Kettenlaufwerkbaugruppen, das mit der Vielzahl von Rahmenelementen gekoppelt ist, wobei jede Kettenlaufwerkbaugruppe eine Endloskette umfasst, die um eine Vielzahl von Rädern herum gelegt ist.

## Beschreibung

### TECHNISCHES GEBIET

Ausführungsformen des hier offenbarten Gegenstands beziehen sich auf ein Kettenfahrzeug.

### STAND DER TECHNIK UND KURZDARSTELLUNG

Kettenfahrzeuge, z. B. Gleiskettenfahrzeuge, sind wohlbekannte Fahrzeuge, die für eine Vielzahl von Anwendungen, z. B. zum Präparieren von Skipisten, zum Transport von Arbeitsgerätschaft, im Baugewerbe und bei anderen Transportaufgaben, eingesetzt werden. Solche Fahrzeuge sind oft so eingerichtet, dass sie auf unterschiedlichem Gelände, z. B. auf unwegsamem Gelände mit Schlamm, steilen Hügeln, Sümpfen, Felsen und/oder Schnee, fahren können.

Solche Kettenfahrzeuge umfassen häufig ein Antriebsaggregat, das eine Kraftmaschine, z. B. einen Verbrennungsmotor, und eine Vielzahl zugehöriger und zur Unterstützung der Kraftmaschine eingerichteter Komponenten aufweist. Die zugehörigen Komponenten, einschließlich der Flüssigkeitsbehälter (z. B. Hydraulikölbehälter, Scheibenwischerflüssigkeitsbehälter usw.), Filter, elektrischen Komponenten und dergleichen, können regelmäßige Instandhaltungs- und/oder Wartungsarbeiten zum Reparieren, Austauschen und/oder Nachfüllen benötigen.

Steben et al. (US 10384732B2) lehrt ein Beispiel für ein Kettenfahrzeug, wie es hier erörtert wird. Das Kettenfahrzeug gemäß Stehens Ausgestaltung verfügt über eine in einem Gehäuse untergebrachte Antriebsanlage. In dem Antriebsanlagengehäuse ist eine Vielzahl von Antriebsanlagenkomponenten, einschließlich Kraftmaschine, Hydraulikpumpe und Antriebssystem, Kühlmittelbehälter, mehrere Flüssigkeitsbehälter und Batteriesystem, untergebracht. Wie von Steben et al. beschrieben, wird ein Zugang zum Gehäuse dadurch ermöglich, dass das Gehäuse auf ein Fahrgestell des Kettenfahrzeugs montiert ist. Für den Zugang zu den Komponenten der Antriebsanlage kann es jedoch notwendig sein, mindestens einen Teil des Gehäuses abzubauen, wodurch sich der Zeitaufwand für die Instandhaltung und/oder Wartung der Komponenten der Antriebsanlage erhöht.

Ferner verfügen Kettenfahrzeuge über einen Platz für einen Fahrer, wie z. B. eine Fahrerkabine, von dem aus der Fahrer das Kettenfahrzeug bedienen kann. Solche Fahrerplätze sind häufig umschlossen und weisen ein oder mehrere Fenster (z. B. Windschutzscheiben) auf, durch die der Fahrer auf dem Bedienplatz sitzend die Umgebung mit Gelände, Objekten und/oder Personen sehen kann. In einigen beispielhaften Kettenfahrzeugen können Teile des Sichtfelds des Fahrers dadurch eingeschränkt sein, dass Komponenten des Kettenfahrzeugs, wie ein Motorgehäuse (z. B. ein Antriebsaggregatgehäuse) derart positioniert sind, dass sie das Sichtfeld teilweise verdecken.

Die Erfinder haben die oben genannten Probleme erkannt und ein Kettenfahrzeug entwickelt, das diese Probleme zumindest teilweise behebt.

Aufgabe der Erfindung ist es, ein Kettenfahrzeug der eingangs genannten Art zu schaffen, das gegenüber dem Stand der Technik eine verbesserte Nutzbarkeit ermöglicht.

Diese Aufgabe wird durch die Merkmale des Anspruchs 1 gelöst. Verschiedene Funktionskomponenten des Antriebsaggregates, d.h. des Antriebssystems für das Kettenfahrzeug, sind so zusammengruppiert, dass ein einfacher Zugang und eine einfache Bedienbarkeit ermöglicht ist. So ist vorgesehen, alle Funktionskomponenten kompakt zueinander anzuordnen, die ein Nachfüllen mit Betriebsmitteln ermöglichen. Alternativ oder ergänzend ist eine Untergruppe vorgesehen, bei der alle Funktionskomponenten zusammengruppiert sind, die einen Filteraustausch erforderlich machen. Alternativ oder ergänzend kann eine weitere Untergruppe kompakt zueinander angeordnet sein, die die verschiedenen Kühlsystemkomponenten des Antriebsaggregates gruppiert. Alternativ oder ergänzend können elektrische Funktionskomponenten kompakt zusammengruppiert werden, die einen schnellen und einfachen Zugang im Wartungsfall für einen Elektriker ermöglichen.

Vorzugsweise umfasst eine erste Untergruppe eine Mehrzahl von Nachfüllkomponenten für Betriebsmittel des Antriebsaggregates und/oder eine Mehrzahl von elektrischen Komponenten. Weiter vorzugsweise umfasst eine zweite Untergruppe eine Mehrzahl von Filterkomponenten und vorzugsweise einen externen elektrischen Anschluss. Schließlich umfasst vorzugsweise eine dritte Untergruppe eine oder mehrere Kühlsystemkomponenten.

In weiterer Ausgestaltung der Erfindung ist der seitliche Teil des Antriebsaggregatgehäuses seitlich neben der Fahrerkabine positioniert und umfasst einen vorderen Abschnitt, einen rückwärtigen Abschnitt und einen mittleren, zwischen dem vorderen Abschnitt und dem rückwärtigen Abschnitt positionierten Abschnitt, wobei ein vorderes Ende des vorderen Abschnitts zu dem vorderen Ende der Fahrerkabine ausgerichtet ist und der rückwärtige Abschnitt seitlich des hinteren Teils des Antriebsaggregatgehäuses positioniert ist. Vorzugsweise umfassen der vordere Abschnitt eine erste Wartungsklappe, der rückwärtige Abschnitt eine zweite Wartungsklappe und der mittlerer Abschnitt eine dritte Wartungsklappe, wobei die erste Wartungsklappe durch die dritte Wartungsklappe von der zweiten Wartungsklappe beabstandet ist, wobei die erste, zweite und dritte Wartungsklappe sich in Längsrichtung des Kettenfahrzeugs nicht überlappen, und wobei jede Wartungsklappe an Scharnieren befestigt ist und so ausgeführt ist, dass sie sich vom vorderen Ende des Kettenfahrzeugs wegöffnet. Die Öffnung kann dabei entweder nach hinten oder nach oben oder schräg nach oben und nach hinten erfolgen.

In weiterer Ausgestaltung der Erfindung ist die erste Wartungsklappe so ausgeführt, dass sie den Zugang zu einer ersten Untergruppe von Funktionskomponenten des Antriebsaggregates gestattet. Die zweite Wartungsklappe ist so ausgeführt, dass sie den Zugang zu einer zweiten Untergruppe von Funktionskomponenten des Antriebsaggregates gestattet, und die dritte Wartungsklappe ist so ausgeführt, dass sie den Zugang zu einer dritten Untergruppe von Funktionskomponenten des Antriebsaggregates gestattet, wobei jede Gruppe von der ersten, zweiten und dritten Untergruppe für den Zugang über die erste Seite des Kettenfahrzeugs angeordnet ist, wenn eine entsprechende Wartungsklappe geöffnet ist.

In weiterer Ausgestaltung der Erfindung ist eine Außenwand der dritten Wartungsklappe mit Öffnungen versehen, die so ausgeführt sind, dass sie einen Luftstrom durch sie hindurch gestatten, und es ist insbesondere ein Kondensator eines Kühlsystems fest an einer Innenfläche der dritten Wartungsklappe angebracht. Die Öffnungen können als Perforationen, als Schlitze, als mit Schlitzen oder anderen Durchbrüchen versehene Rippen oder Ähnliches ausgeführt sein.

Die der Erfindung zugrundeliegende Aufgabe wird auch durch die Merkmale des Anspruchs 7 gelöst. Dabei ist ein vorderer Abschnitt eines seitlichen Teils des Antriebsaggregatgehäuses mit einer nach vorne und/oder zur Seite hin abfallenden Oberseite versehen, und die Fahrerkabine umfasst einen nach vorn gerichteten Sichtscheibenteil und eine Mehrzahl von seitlich gerichteten Sichtscheibenteilen, wobei ein erster seitlich gewandter Sichtscheibenteil, der an der ersten Seite der Fahrerkabine positioniert ist, so ausgeführt ist, dass er zu der abfallenden Oberseite des vorderen Abschnitts des Antriebsaggregatgehäuses ausgerichtet ist. Dadurch ist trotz des teilweise seitlich neben der Fahrerkabine angeordneten Antriebsaggregatgehäuses eine gute Übersicht zu beiden Seiten der Fahrerkabine sowie nach vorne für einen in der Fahrerkabine sitzenden Fahrer des Kettenfahrzeugs gewährleistet.

In weiterer Ausgestaltung der Erfindung weist die Wartungsklappe eine dreidimensionale Form auf und ist derart an dem Abschnitt des Antriebsaggregatgehäuses angelenkt, dass bei einem Öffnen der Wartungsklappe ein Zugang von oben her auf in dem vorderen Abschnitt des Antriebsaggregatgehäuses gruppierte Funktionskomponenten ermöglicht ist. Bei einem Öffnen der Wartungsklappe ist somit nicht nur ein Zugang von einer Seite her zu den Funktionskomponenten möglich, sondern auch ein Zugang von oben, da ein Ausschnitt des vorderen Abschnittes des Antriebsaggregatgehäuses, der durch die Wartungsklappe verdeckt wird, nicht nur zur Seite, sondern auch nach oben hin offen ist. Dies ermöglicht insbesondere einfache Befüllvorgänge für Befüllstutzen der Funktionskomponenten, um entsprechende Betriebsmittel für das Antriebsaggregat nachfüllen zu können.

Vorzugsweise ist ein zurückgesetzter Teil eines durch die dreidimensionale Wartungsklappe verdeckten Ausschnittes des vorderen Abschnitts des Antriebsaggregatgehäuses so gestaltet, dass ein Zugang zumindest zu einem Teil einer Untergruppe von Funktionskomponenten des Antriebsaggregatgehäuses von oben ermöglicht ist.

Das Kettenfahrzeug umfasst in einem Beispiel ein Antriebsaggregat, das in einem eine Mehrzahl von Wartungsklappen aufweisenden Gehäuse untergebracht ist. Jede der Mehrzahl von Wartungsklappen ermöglicht den Zugang zu einer jeweiligen Untergruppe von Komponenten des Antriebsaggregats, einschließlich einer ersten Untergruppe von Komponenten, die über eine erste Wartungsklappe zugänglich ist, einer zweiten Untergruppe von Komponenten, die über eine zweite Wartungsklappe zugänglich ist, und einer dritten Untergruppe von Komponenten, die über eine dritte Wartungsklappe zugänglich ist. Jede Gruppe von der ersten, zweiten und dritten Untergruppe von Komponenten des Antriebsaggregats ist so angeordnet, dass die Effizienz von Wartungs- und Instandhaltungsaufgaben erhöht wird, einschließlich des Gruppierens von Komponenten in verschiedene Untergruppen basierend auf Funktionalität und Ausgestaltung derartig, dass sie sowohl eine Kraftmaschine unterstützen als auch in einen verfügbaren Platz eines entsprechenden Abschnitts des Gehäuses passen. In einigen Beispielen umfasst die erste Untergruppe von Komponenten eine Vielzahl von Nachfüllkomponenten, wie eine Vielzahl von Einfüllstutzen für verschiedene Flüssigkeitsbehälter, sowie eine Vielzahl von elektrischen Komponenten; umfasst die zweite Untergruppe von Komponenten eine Vielzahl von Filtern; und umfasst die dritte Untergruppe von Komponenten eine oder mehrere Kühlsystemkomponenten, wie einen Kondensator und einen Kombikühler. Somit sind Komponenten, die häufige, manchmal tägliche, Wartung und/oder Instandhaltung erfordern, leichter über die Vielzahl von Wartungsklappen zugänglich. Die Begriffe "Mehrzahl" und "Vielzahl" in der vorliegenden Beschreibung bedeuten, dass wenigstens zwei Teile oder Komponenten vorgesehen sind.

Das Gehäuse des Antriebsaggregats umfasst einen hinteren Teil und einen seitlichen Teil, wobei der seitliche Teil in einen vorderen Abschnitt, einen rückwärtigen Abschnitt und einen zwischen dem vorderen und dem rückwärtigen Abschnitt positionierten mittleren Abschnitt unterteilt ist. Der vordere Abschnitt des Gehäuses ist einen abfallenden Winkel aufweisend ausgeführt, sodass die Höhe des vorderen Endes des vorderen Abschnitts niedriger ist als die Höhe des rückwärtigen Endes des vorderen Abschnitts. Durch den abfallenden Winkel an der Vorderseite der Umschliessung wird eine Vergrößerung eines seitlich gewandten Teils der Windschutzscheibe einer Fahrerkabine möglich, wodurch das seitliche Sichtfeld des Fahrers vergrößert wird. Ferner erstreckt sich ein nach vorn gewandter Teil der Windschutzscheibe weiter nach unten bis zu einer Höhe, die niedriger ist als die Höhe des vorderen Endes des vorderen Abschnitts der Umschliessung ist. Somit wird das nach vorn gewandte Sichtfeld des Fahrers durch eine Vergrößerung des Tiefenwinkels des Sichtfeldes weiter vergrößert. Durch das vergrößerte seitliche Sichtfeld und nach vorn gewandte Sichtfeld kann der Fahrer Objekte, Personen und das Gelände besser sehen.

Ferner umfasst der erste Abschnitt des seitlichen Teils des Gehäuses einen Ausschnitt, der entlang einer Querrichtung einen zurückgesetzten Teil aufweist, der bei geöffneter erster Wartungsklappe den Zugang zu der ersten Untergruppe von Komponenten gestattet. Die erste Wartungsklappe des Gehäuses ist derart ausgeführt, dass ihre unregelmäßige Form bei geschlossener erster Wartungsklappe einen Ausschnitt des vorderen Abschnitts des Gehäuses abdeckt. Durch den Zugang von oben kann die Effizienz des Zugangs zu der ersten Untergruppe von Komponenten während der Wartung und/oder Instandhaltung weiter erhöht werden.

Der beanspruchte Gegenstand ist nicht auf Ausführungen, die die oben oder in anderen Teilen dieser Offenbarung genannten Nachteile beheben, beschränkt. Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.

### KURZBESCHREIBUNG DER ZEICHNUNGEN

Fig. 1 zeigt ein Kettenfahrzeug gemäß der vorliegenden Offenbarung.
Fig. 2 zeigt das Kettenfahrzeug mit Arbeitsgerätschaft, die auf einem Fahrgestell des Kettenfahrzeugs positioniert ist.
Fig. 3 zeigt das Kettenfahrzeug mit freiliegenden Komponenten eines Antriebsaggregats.
Fig. 4 zeigt das Kettenfahrzeug mit freiliegenden Komponenten des Antriebsaggregats.
Fig. 5 zeigt eine erste Untergruppe von Komponenten des Antriebsaggregats, die über eine erste Wartungsklappe des Antriebsaggregatgehäuses in geöffnetem Zustand zugänglich ist.
Fig. 6 zeigt eine Draufsicht auf das Kettenfahrzeug mit der ersten Wartungsklappe des Antriebsaggregats in geöffnetem Zustand.
Fig. 7 zeigt das Kettenfahrzeug mit einer zweiten Wartungsklappe des Antriebsaggregats in geöffnetem Zustand.
Fig. 8 zeigt eine zweite Untergruppe von Komponenten des Antriebsaggregats, die über die zweite Wartungsklappe in geöffnetem Zustand zugänglich ist.
Fig. 9 zeigt eine dritte Untergruppe von Komponenten des Antriebsaggregats des Kettenfahrzeugs, die über eine dritte Wartungsklappe in geöffnetem Zustand zugänglich ist.
Fig. 10 zeigt Rippen der dritten Wartungsklappe des Antriebsaggregats des Kettenfahrzeugs.
Fig. 11 zeigt die elektrischen Komponenten des Antriebsaggregats des Kettenfahrzeugs.
Fig. 12 zeigt einen abfallenden Winkel eines vorderen Abschnitts eines Gehäuses des Antriebsaggregats des Kettenfahrzeugs.
Fig. 13A zeigt ein nach vorn gewandtes Sichtfeld eines Fahrers von einer ersten seitlichen Seite des Kettenfahrzeugs.
Fig. 13B zeigt das nach vorn gewandte Sichtfeld des Fahrers von einer zweiten seitlichen Seite des Kettenfahrzeugs.
Fig. 14 zeigt ein erstes seitliches Sichtfeld von einem vorderen Ende des Kettenfahrzeugs.
Fig. 15 zeigt ein zweites seitliches Sichtfeld von dem vorderen Ende des Kettenfahrzeugs.

### AUSFÜHRLICHE BESCHREIBUNG

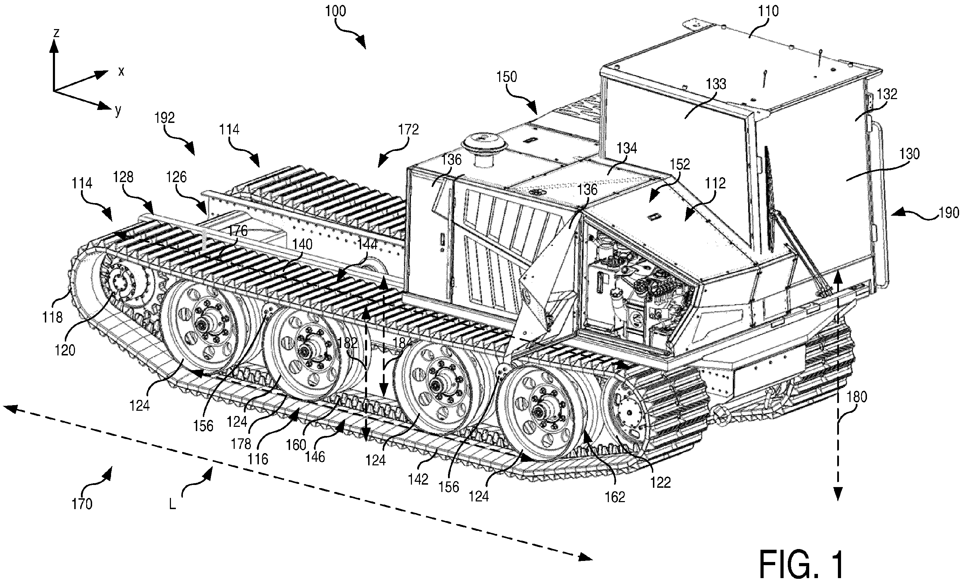

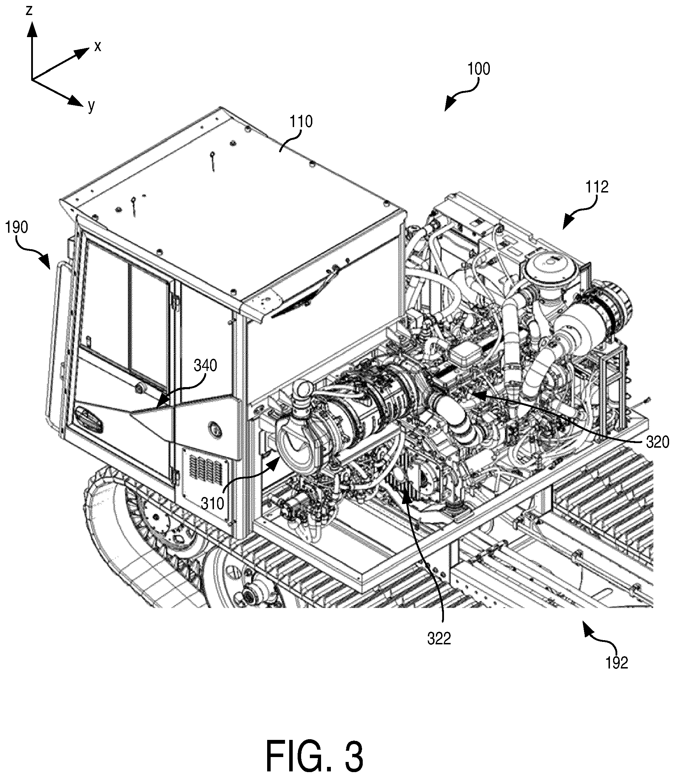

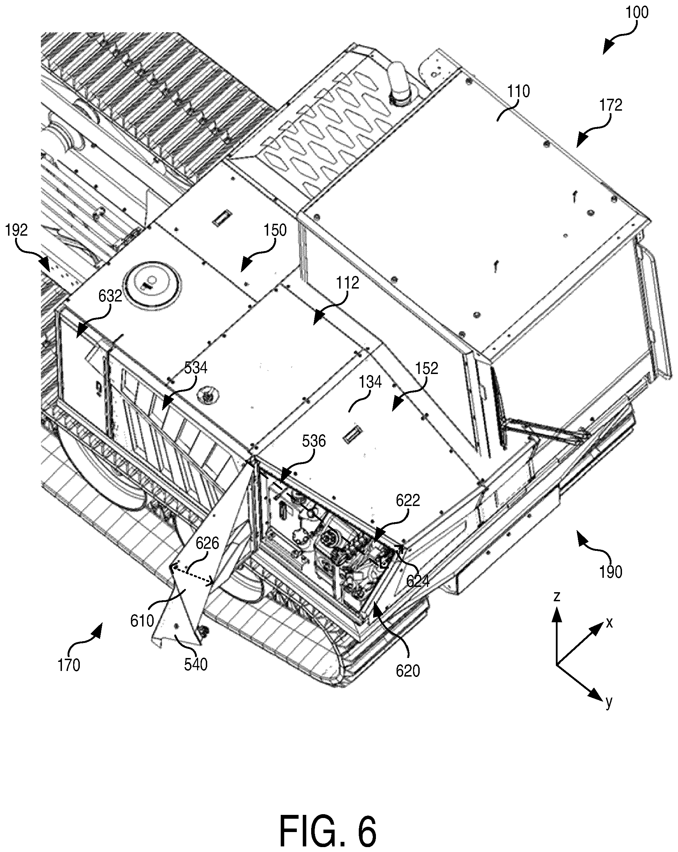

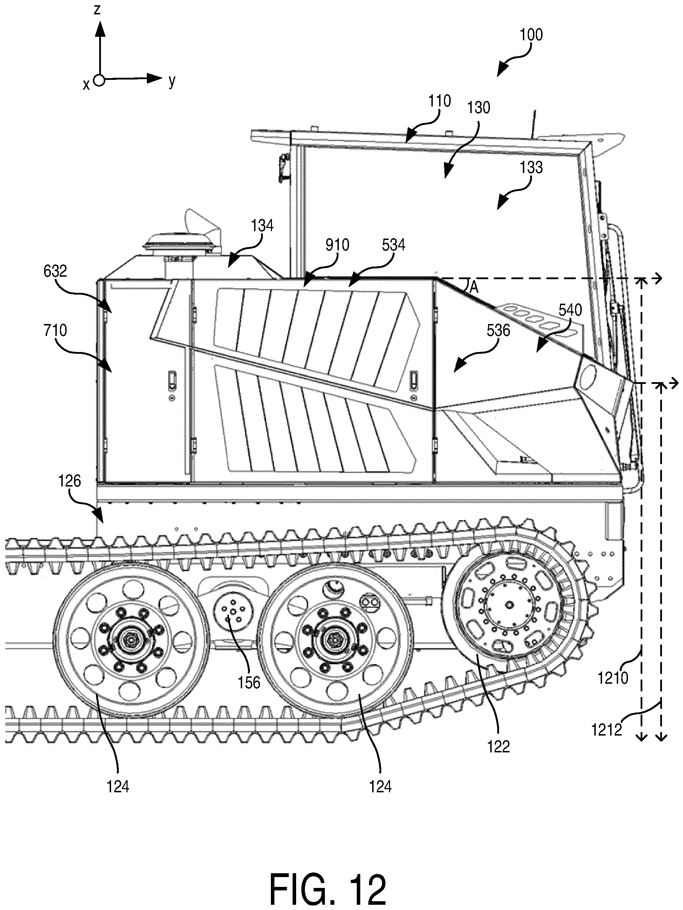

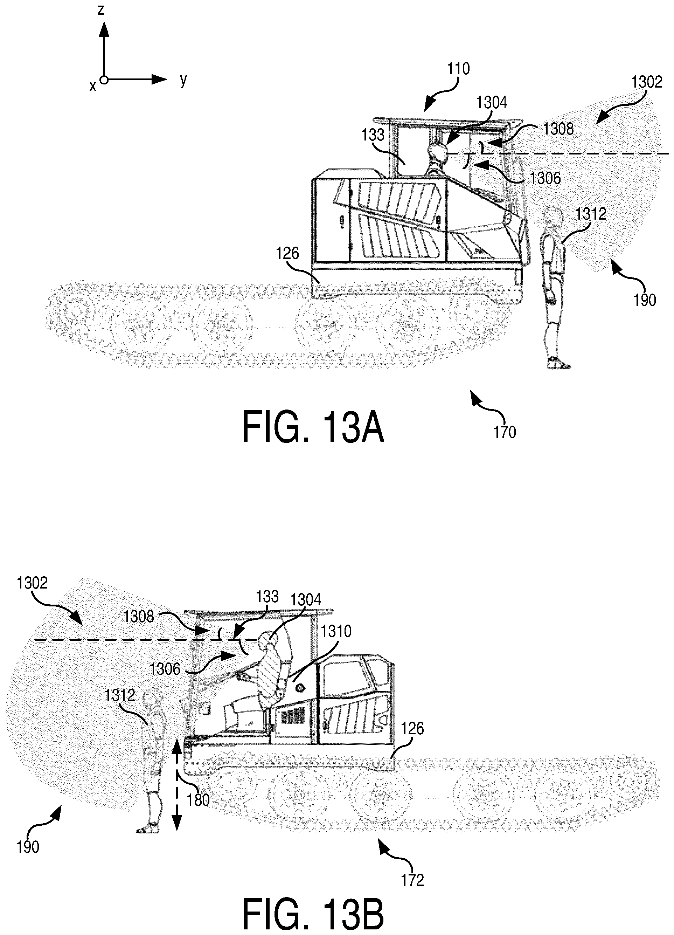

Die nachfolgende Beschreibung bezieht sich auf Systeme für ein Kettenfahrzeug. Das Kettenfahrzeug der vorliegenden Offenbarung ist in den Fig. 1, 2, 7 und 9 dargestellt. Das Kettenfahrzeug weist ein in einem Gehäuse untergebrachtes Antriebsaggregat auf. In dem Antriebsaggregat enthaltene Komponenten, einschließlich Kraftmaschine, elektrischen Komponenten, Flüssigkeitsanschlüssen (z. B. Einfüllstutzen) unter anderen, sind in den Fig. 3, 4, 5, 8, 11 und 12 dargestellt. In den Fig. 6, 7 und 9 ist eine Vielzahl von Wartungsklappen dargestellt, die dazu eingerichtet sind, den Zugang zu den Komponenten des Antriebsaggregats zu gestatten. Verschiedene Teile des Sichtfelds eines Fahrers des Kettenfahrzeugs, die, wie in Fig. 12 gezeigt, zumindest teilweise durch einen abfallenden Winkel eines vorderen Endes des Gehäuses des Antriebsaggregats bereitgestellt werden, sind in Fig. 13A, 13B, 14 und 15 dargestellt.

Fig. 1-15 zeigen beispielhafte Ausgestaltungen mit einer Positionierung der verschiedenen Komponenten zueinander. Wenn Elemente so dargestellt sind, dass sie direkt an-/aufeinander an-/aufliegen oder direkt miteinander gekoppelt sind, können sie zumindest in einem Beispiel als direkt an-/aufeinander an-/aufliegend bzw. direkt miteinander gekoppelt bezeichnet werden. In ähnlicher Weise können Elemente, die zusammenhängend oder aneinander angrenzend dargestellt sind, zumindest in einem Beispiel zusammenhängend bzw. aneinander angrenzend sein. So können beispielsweise Komponenten, die aneinander flächig anliegen, als flächig aneinander anliegend bezeichnet werden. Als weiteres Beispiel können voneinander beabstandete Elemente, zwischen denen es nur einen Zwischenraum und keine weiteren Komponenten gibt, in zumindest einem Beispiel als solche bezeichnet werden. Ein weiteres Beispiel können Elemente, die übereinander/untereinander, auf einander gegenüberliegenden Seiten oder links/rechts voneinander dargestellt sind, als derartig zueinander liegend werden. Ferner kann, wie in den Figuren dargestellt, zumindest in einem Beispiel ein oberstes Element oder ein oberster Punkt eines Elements als "Oberseite" der Komponente und ein unterstes Element oder ein unterster Punkt des Elements als "Unterseite" der Komponente bezeichnet werden. Die hier verwendeten Ausdrücke Oberseite/Unterseite, obere/untere, oberhalb/unterhalb können auf eine vertikale Achse der Figuren Bezug nehmen und zur Beschreibung der Positionierung von Elementen der Figuren zueinander verwendet werden. So sind in einem Beispiel Elemente, die oberhalb anderen Elementen gezeigt werden, vertikal oberhalb der anderen Elementen positioniert. Als weiteres Beispiel können die Formen der in den Figuren dargestellten Elemente als diese Formen aufweisend (z. B. kreisförmig, gerade, eben, gekrümmt, abgerundet, abgeschrägt, abgewinkelt oder dergleichen sein) bezeichnet werden. Ferner können die als sich gegenseitig schneidend dargestellten Elemente in mindestens einem Beispiel als schneidende Elemente oder als einander schneidende Elemente bezeichnet werden. Darüber hinaus kann ein Element, das innerhalb eines anderen Elements oder außerhalb eines anderen Elements dargestellt wird, in eine Beispiel als solches bezeichnet werden.

In Fig. 1 ist ein ziviles Kettenfahrzeug 100 dargestellt. Bei dem Kettenfahrzeug 100 kann es sich um ein Kettenennutzfahrzeug handeln, das für eine oder mehrere einer Reihe von Anwendungen, z. B. für den Transport von Arbeitsgerätschaft, wie einem Kipper, für Bauanwendungen und ähnliches, eingerichtet ist. Das Kettenfahrzeug 100 kann in einigen Beispielen eine Fahrerkabine 110 und ein Antriebsaggregat 112 aufweisen, die beide an ein Fahrgestell 126 montiert und direkt auf diesem positioniert sind. Das Kettenfahrzeug 100 kann eine Länge L in Längsrichtung haben und das Fahrgestell 126 erstreckt sich entlang der Länge L des Kettenfahrzeugs 100. Die Längsrichtung des Kettenfahrzeugs 100 kann zu einer Längsachse ausgerichtet (z. B. parallel dazu) sein. Die Fig. 1-15 weisen ein Koordinatensystem auf. Eine y-Achse des Koordinatensystems kann der Längsrichtung des Kettenfahrzeugs entsprechen, eine x-Achse des Koordinatensystems kann der Querrichtung des Kettenfahrzeugs entsprechen und eine z-Achse des Koordinatensystems kann eine vertikale Achse (z. B. eine Gravitationsachse) sein.

Das Antriebsaggregat 112 kann eine Kraftmaschine (z. B. einen Verbrennungsmotor, einen Fahrmotor, eine elektrische Maschine usw.), ein Hydrauliksystem, ein Batteriesystem, eine Vielzahl von Einfüllstutzen für verschiedene Flüssigkeitsbehälter und eine Vielzahl von elektrischen Komponenten umfassen. Jede der Komponenten innerhalb des Antriebsaggregats 112 kann in einem Antriebsaggregatgehäuse 134 (z. B. einer Umschliessung) untergebracht sein, das auf die Oberseite des Fahrgestells 126 montiert oder anderweitig mit diesem gekoppelt ist. Das Antriebsaggregatgehäuse 134 kann einen hinteren Teil 150, der sich direkt hinter (z. B. hinter dem rückwärtigen Ende 192) der Fahrerkabine 110 befindet, und einen seitlichen Teil 152, der sich an einer Seite der Fahrerkabine 110 befindet, umfassen. Der seitliche Teil 152 kann direkt neben der Fahrerkabine 110 positioniert sein, sodass eine zweite seitliche Seite 172 des seitlichen Teils 152 des Antriebsaggregatgehäuses 134 flächig an einer ersten seitlichen Seite 170 der Fahrerkabine 110 anliegt. Wie bereits erwähnt, kann sich das Antriebsaggregat 112 durch den hinteren Teil 150 weiter hinter die Fahrerkabine 110 erstrecken, sodass das Antriebsaggregat 112 und das Antriebsaggregatgehäuse 134 allgemein L-förmig ausgeführt sind.

Das Antriebsaggregat 112 und die Komponenten darin können so eingerichtet sein, dass sie Leistung zum Bewegen des Kettenfahrzeugs 100 erzeugen, und als solche können sie in einer Antriebsbeziehung mit jeder Baugruppe von zwei Kettenlaufwerkbaugruppen 114 stehen. Die Leistung des Antriebsaggregats 112 kann über ein hydraulisches Antriebssystem, das eine von der Kraftmaschine angetriebene und mit einem Hydraulikmotor verbundene Hydraulikpumpe umfasst, auf die beiden Kettenlaufwerkbaugruppen 114 übertragen werden, wobei die Leistung bei anderen Ausführungsformen auf verschiedene andere Arten übertragen werden kann.

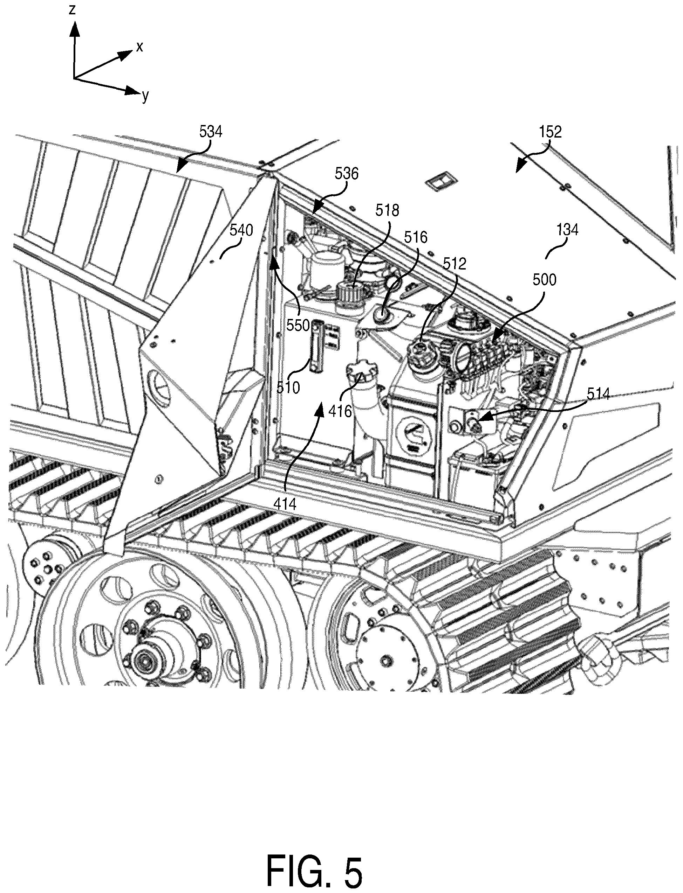

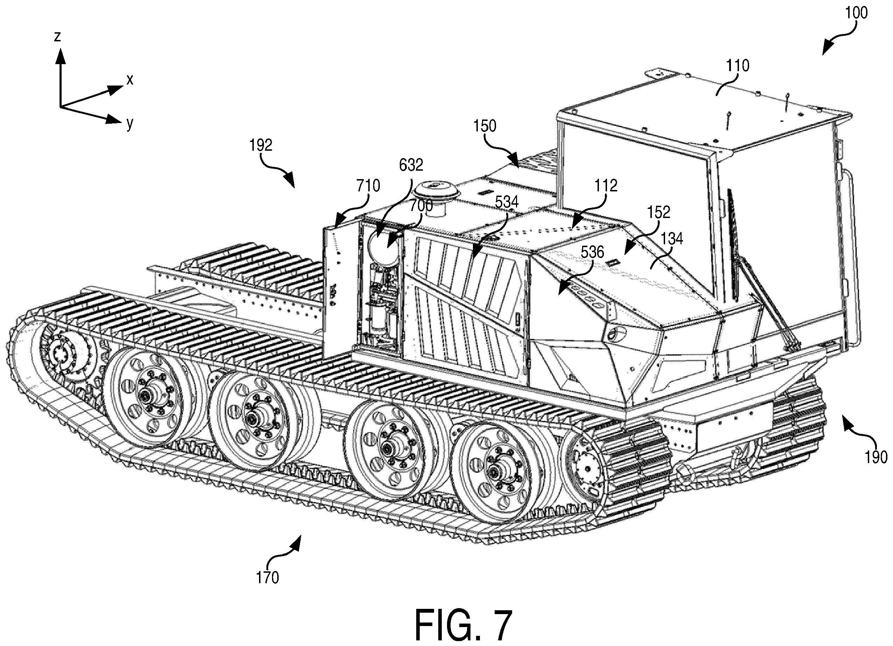

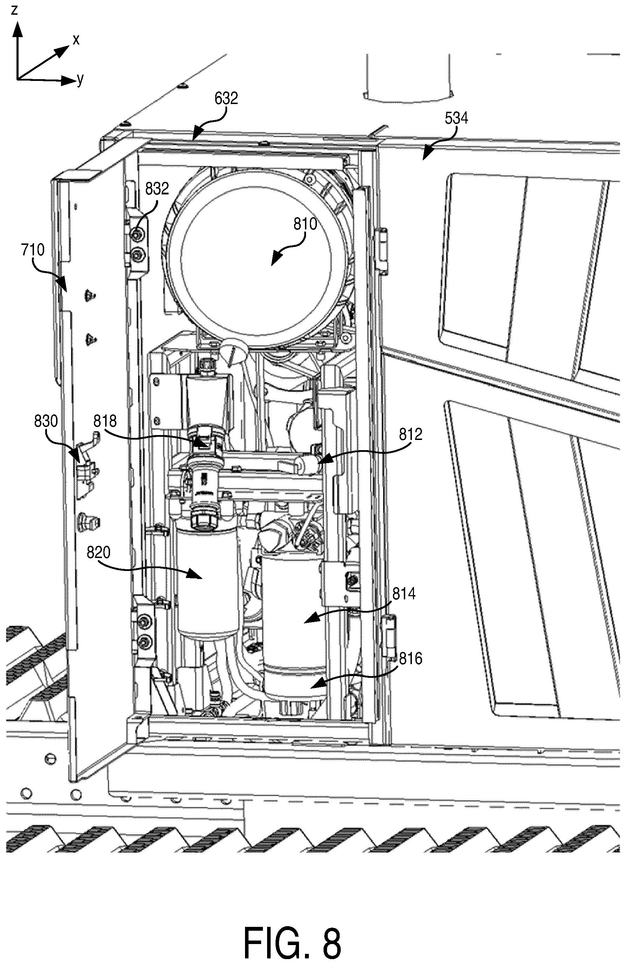

Das Antriebsaggregatgehäuse 134 kann eine Mehrzahl von Wartungsklappen 136 umfassen, die an der ersten seitlichen Seite 170 des seitlichen Teils 152 des Antriebsaggregatgehäuses 134 positioniert sind. Jede der Mehrzahl von Wartungsklappen 136 gestattet in geöffnetem Zustand den Zugang zu einer jeweiligen Untergruppe von Komponenten des Antriebsaggregats 112. Jede der Mehrzahl von Wartungsklappen 136 kann den Zugang zu einer anderen Untergruppe von Komponenten des Antriebsaggregats 112 gestatten und die Komponenten können in entsprechende Untergruppen basierend auf Funktionalität und Ausgestaltung gruppiert sein. Beispielsweise kann eine Filterwartungsklappe, wie sie später unter Bezugnahme auf die Figuren 7 und 8 beschrieben wird, den Zugang zu einer Mehrzahl von Filterelementen gestatten, während eine Nachfüllklappe, wie sie später unter Bezugnahme auf die Fig. 5 und 6 beschrieben wird, den Zugang zu der Mehrzahl von Einfüllstutzen gestatten kann. Somit können Komponenten, die Flüssigkeitsbehälter mit Einfüllstutzen umfassen, so zusammengruppiert werden, dass sie von einer einzigen Wartungsklappe/einem einzigen Zugangsdeckel aus zugänglich sind, während Komponenten, die austauschbare/auswechselbare Filter umfassen, so zusammengruppiert sein können, dass sie von einer zweiten einzigen Wartungsklappe/einem zweiten einzigen Zugangspaneel aus zugänglich sind. Darüber hinaus können die Komponenten einer jeweiligen Untergruppe von Komponenten so angeordnet sein, dass sie in einen verfügbaren Platz eines jeweiligen Abschnitts des Antriebsaggregatgehäuses 134 passen.

Ferner kann die Montage des Antriebsaggregatgehäuses 134 und der Komponenten des Antriebsaggregats 112 oberhalb des Fahrgestells 126 den Einbau und die Wartung der Komponenten des Antriebsaggregats 112 erleichtern. So können z. B. Instandhaltungs- oder andere Wartungsarbeiten durchgeführt werden, indem über eine oder mehrere der Vielzahl von Wartungsklappen 136 Zugang zu den Komponenten des Antriebsaggregats 112 erlangt wird, ohne dass dieser durch die Fahrerkabine 110 oder andere Komponenten (wie z. B. an das Fahrgestell 126 montierte Arbeitsgerätschaft) behindert wird.

In einigen Beispielen umfasst die Fahrerkabine 110 einen Sitz mit einer einzigen Sitzposition, auf der ein Fahrer (z. B. der in Fig. 13A-15 gezeigte Fahrer 1304) bei der Bedienung des Kettenfahrzeugs 100 sitzt. Die Fahrerkabine 110 umfasst ferner eine Windschutzscheibe 130, die sich über einen nach vorn gewandten Teil 132 sowie eine Vielzahl von seitlich gewandten Teilen 133 erstreckt. Ein erster seitlich gewandter Teil kann auf der ersten seitlichen Seite 170 und ein zweiter seitlich gewandter Teil kann an der zweiten seitlichen Seite 172 positioniert sein. Die Windschutzscheibe 130 kann es dem Fahrer des Kettenfahrzeugs 100 gestatten, Objekte (Personen, Hindernisse, Gelände usw.) vor dem Kettenfahrzeug 100 und seitlich des Kettenfahrzeugs 100 zu sehen. Eine Unterkante des nach vorn gewandten Teils 132 der Windschutzscheibe 130 kann eine Höhe 180 über dem Boden haben. Zudem kann die Unterkante des nach vorn gewandten Teils 132 näher zum Boden liegen als die Oberseite des Antriebsaggregatgehäuses 134. Die durch die Windschutzscheibe 130 bereitgestellten Sichtfelder des Fahrers werden in den Fig. 13A-15 näher beschrieben.

In einigen Beispielen umfasst das Fahrgestell 126 einen Rahmen, der eine Vielzahl sich entlang der Länge L des Kettenfahrzeugs erstreckender Rahmenelementen 128 umfasst. Ein erstes Rahmenelement kann an der ersten seitlichen Seite 170 und das zweite Rahmenelement an einer zweiten seitlichen Seite 172 positioniert sein, wobei die zweite seitliche Seite 172 der ersten seitlichen Seite 170 in einer Querrichtung des Kettenfahrzeugs 100 gegenüberliegt. Die Fahrerkabine 110 kann so auf dem Fahrgestell 126 positioniert sein, dass ein vorderes Ende 190 der Fahrerkabine 110 zu dem vorderen Ende 190 jedes der Elemente der Vielzahl von Rahmenelementen 128 und dem vorderen Ende 190 des Fahrgestells 126 ausgerichtet ist. Das vordere Ende 190 des Antriebsaggregatgehäuses 134 kann zu dem vorderen Ende 190 der Fahrerkabine 110 ausgerichtet sein. Jedes Element der Vielzahl von Rahmenelementen 128 kann mit einer der beiden Kettenlaufwerkbaugruppen 114 gekoppelt sein und diese tragen.

Die beiden Kettenlaufwerkbaugruppen 114 können so ausgebildet sein, dass sie, wenn sie auf einer Bodenoberfläche aufliegen, für den Antrieb des Kettenfahrzeugs 100 sorgen. Eine erste Kettenlaufwerkbaugruppe der beiden Kettenlaufwerkbaugruppen 114 kann auf der ersten seitlichen Seite 170 (z. B. einer rechten Seite) des Kettenfahrzeugs 100 positioniert und mit dem ersten Rahmenelement gekoppelt sein und eine zweite Kettenlaufwerkbaugruppe der beiden Kettenlaufwerkbaugruppen 114 kann auf der zweiten seitlichen Seite 172 (z. B. einer linken Seite) des Kettenfahrzeugs 100 positioniert und mit dem zweiten Rahmenelement gekoppelt sein. Die erste der beiden Kettenlaufwerkbaugruppen 114 kann spiegelbildlich zu der zweiten der beiden Kettenlaufwerkbaugruppen 114 sein.

Jede der beiden Kettenlaufwerkbaugruppen 114 kann eine Endloskette 118 umfassen, die um eine Vielzahl von Rädern 116 herum gelegt ist. Die Vielzahl Räder 116 kann ein Spannrad 120, ein Antriebsrad 122 und eine Vielzahl von Laufrädern 124 umfassen. In einigen Beispielen kann das Spannrad 120 in Längsrichtung am Kettenfahrzeug 100 weiter rückwärtig positioniert sein als das Antriebsrad 122. Das Spannrad 120 kann von dem Antriebsrad 122 beabstandet sein und die Vielzahl von Laufrädern 124 kann in Längsrichtung des Kettenfahrzeugs 100 zwischen dem Spannrad 120 und dem Antriebsrad 122 positioniert sein. Das Spannrad 120 kann zudem von einem rückwärtigsten Laufrad der Vielzahl von Laufrädern 124 beabstandet sein und das Antriebsrad 122 kann von einem vordersten Laufrad der Vielzahl von Laufrädern 124 beabstandet sein, sodass sich das Spannrad 120 mit keinem der Vielzahl von Laufrädern 124 und das Antriebsrad 122 mit keinem der Vielzahl von Laufrädern 124 überlappt.

In einigen Beispielen kann das Antriebsrad 122 das vorderste Rad der Vielzahl von Rädern 116 sein. Das Antriebsrad 122 kann mit einer Kraftmaschine des Antriebsaggregats 112 in einer Antriebsbeziehung stehen, um die Endloskette 118 zum Antreiben des Kettenfahrzeugs 100 in Bewegung zu versetzen. Das Antriebsrad 122 kann um eine zentrale, zur Querrichtung des Kettenfahrzeugs 100 parallele Drehachse drehbar sein. In der in den hier bereitgestellten Figuren gezeigten Ausführungsform kann das Antriebsrad 122 zur Vorderseite des Kettenfahrzeugs 100 hin positioniert sein und ein Antriebsstrang des Kettenfahrzeugs 100 kann daher so ausgestaltet sein, dass er die Antriebskraft der Kraftmaschine auf die Vorderseite des Kettenfahrzeugs 100 überträgt. In anderen Ausführungsformen kann das Antriebsrad 122 in Richtung eines rückwärtigen Teils des Fahrzeugs positioniert sein.

In einigen Beispielen kann das Spannrad 120 das rückwärtigste Rad der Vielzahl von Rädern 116 sein. Das Spannrad 120 jeder der Vielzahl von Kettenlaufwerkbaugruppen 114 wandelt möglicherweise keine von dem Antriebsaggregat 112 abgeleitete Leistung in Antriebskraft für die Bewegung der Endloskette 118 um. Das Spannrad 120 und die Vielzahl von Laufrädern 124 können die Spannung der Endloskette 118, während diese durch das Antriebsrad 122 angetrieben wird, aufrechterhalten. Ähnlich wie das Antriebsrad 122 kann das Spannrad 120 um eine zentrale, zur Querrichtung des Kettenfahrzeugs 100 parallele Achse drehbar sein. Jedes der Vielzahl von Laufrädern 124 kann ebenfalls um eine jeweilige zentrale, zur Querrichtung des Kettenfahrzeugs 100 parallele Achse drehbar sein. In einigen Beispielen können die jeweiligen zentrale Achsen der Vielzahl von Laufräder 124 zum Ausgleichen eines unebenen Geländes veränderlich sein.

Die Vielzahl der Laufräder 124 kann an Radträgerbaugruppen 156 (z. B. Drehgestellen) gelagert sein. An jeder der Radträgerbaugruppen 156 können mindestens zwei Räder der Vielzahl von Laufrädern 124 gelagert sein. Jede der Radträgerbaugruppen 156 kann eine Verbindungsstruktur und einen Drehpunkt umfassen. Der Drehpunkt kann für die jeweilige Radträgerbaugruppe eine Drehachse definieren und die jeweiligen Laufräder können mit der Verbindungsstruktur einer jeweiligen Radträgerbaugruppe gekoppelt sein. Durch das Drehen der jeweiligen Radträgerbaugruppe können die Positionen der zentralen Achsen der entsprechenden Laufrädern verändert werden. Jede der Radträgerbaugruppen 156 kann mit einem der Rahmenelemente 128 gekoppelt sein und dadurch die jeweiligen Kettenlaufwerkbaugruppen mit einem der Rahmenelemente 128 koppeln.

Ein Obertrum 140 der Endloskette 118 kann über eine erste Strecke 176 vom Spannrad 120 zum Antriebsrad 122 verlaufen und kann oberhalb der und in Kontakt mit der Vielzahl von Laufrädern 124 positioniert sein. Ein Untertrum 142 der Endloskette 118 kann über eine zweiten Strecke 178 zwischen dem rückwärtigsten Laufrad und dem vordersten Laufrad verlaufen. Der Untertrum 142 kann auf der Bodenoberfläche aufliegen, wobei eine Außenfläche 144 der Endloskette 118 so ausgestaltet ist, dass sie in die Bodenoberfläche eingreift und für die Bodenhaftung der Kettenlaufwerkbaugruppe mit der Bodenoberfläche sorgt. Die Außenfläche 144 kann ein Laufflächenprofil aufweisen, das dazu ausgelegt ist, die Bodenhaftung der Endloskette 118 mit der Bodenoberfläche zu erhöhen.

Eine Innenfläche 146 der Endloskette 118 kann an jedem der Vielzahl von Rädern 116 anliegen und somit kann die Innenfläche 146 des Obertrums 140 an jedem der Vielzahl von Laufrädern 124 anliegen. In einigen Beispielen kann die Innenfläche 146 eine Vielzahl von Zähnen 160 aufweisen, die so ausgelegt sind, dass sie in die Führungsräume 162 eines jeden der Vielzahl von Laufrädern 124 passen. Die Vielzahl von Zähnen 160 und die Führungsräume 162 gestatten es der Vielzahl von Rädern 116, in einer bestimmten Position mit der Endloskette 118 in Kontakt zu bleiben.

Der Obertrum 140 und der Untertrum 142 können im Allgemeinen parallel zueinander verlaufen und sich entlang der Längsrichtung des Kettenfahrzeugs 100 erstrecken. In einigen Beispielen kann eine (von der Bodenoberfläche aus gemessene) Höhe 182 des Obertrums 140 der Endloskette 118 größer als eine (von der Bodenoberfläche aus gemessene) Höhe 184 einer oberen Oberfläche eines jeden der Vielzahl von Rahmenelementen 128 sein, sodass eine obere Oberfläche des Obertrums 140 vertikal oberhalb der oberen Oberfläche eines jeden der Vielzahl von Rahmenelementen 128 liegt.

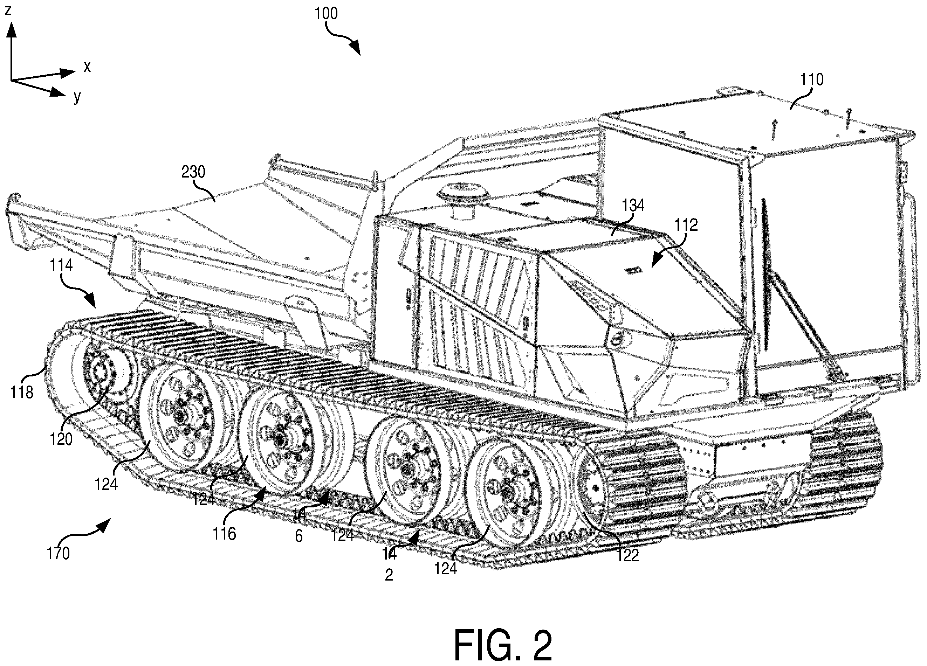

Das die Vielzahl von Rahmenelementen 128 aufweisende Fahrgestell 126 kann zur Aufnahme von Arbeitsgerätschaft, wie z. B. einem Kipper oder einem Lader, ausgelegt sein. Wie in Fig. 2 dargestellt, kann die Arbeitsgerätschaft 230 auf dem Fahrgestell 126 positioniert und abnehmbar damit gekoppelt sein. In einigen Beispielen kann die Drehung, Verschiebung und/oder andere Bewegung der Arbeitsgerätschaft 230 durch die Kraftmaschine angetrieben werden. In anderen Beispielen kann eine andere Energiequelle den Komponenten der Arbeitsgerätschaft 230 eine Antriebskraft bereitstellen. Die Nutzlast des Kettenfahrzeugs 100 kann ausreichend groß sein, dass die Arbeitsgerätschaft 230 auf sinnvolle Weise eingesetzt werden kann.

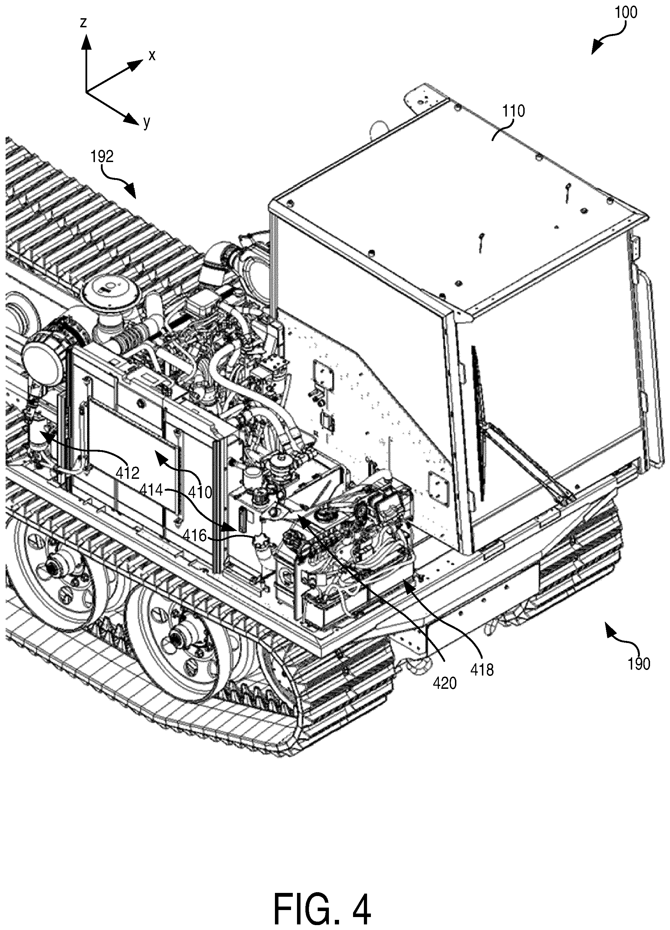

Die Figuren 3 und 4 zeigen eine Ansicht des freiliegenden Antriebsaggregats 112 des Kettenfahrzeugs 100. Fig. 3 zeigt insbesondere eine perspektivische Rückansicht des Antriebsaggregats 112, in der die Komponenten im hinteren Teil 150 des Antriebsaggregatgehäuses 134 dargestellt sind, während Fig. 4 eine perspektivische Vorderansicht des Antriebsaggregats 112 zeigt, in der die Komponenten im seitlichen Teil 152 des Antriebsaggregatgehäuses 134 dargestellt sind. Wie bezugnehmend auf Fig. 1 erörtert, ist das Antriebsaggregat 112 im Allgemeinen L-förmig an der ersten seitlichen Seite und hinter der Fahrerkabine 110 positioniert. Die Fahrerkabine 110 umfasst auf der zweiten seitlichen Seite 172 zudem eine Tür 340, durch die Zugang zu einem Innere der Kabine besteht.

Das Antriebsaggregat 112 umfasst in einigen Beispielen eine Kraftmaschine 320. Die Kraftmaschine 320 kann ein Verbrennungsmotor, ein Dieselmotor, ein Fahrmotor, eine elektrische Maschine oder eine andere Art von Kraftmaschine sein, die dazu eingerichtet ist, dem Kettenfahrzeug 100 eine Antriebskraft bereitzustellen. Das Antriebsaggregat umfasst ferner eine Vielzahl von elektrischen Komponenten, Hydrauliksystemkomponenten, Flüssigkeitsbehältern, Einfüllstutzen und dergleichen, die zur Unterstützung der Kraftmaschine 320 eingerichtet sind. Die Komponenten können so gruppiert und im Antriebsaggregatgehäuse 134 angeordnet sein, dass sie die Kraftmaschine 320 unterstützen und gleichzeitig in den verfügbaren Platz des Antriebsaggregatgehäuses 134 passen. Ferner kann ein Teil der Komponenten wie oben beschrieben so in entsprechenden Untergruppen angeordnet sein, dass sie über mindestens eine Wartungsklappe des Antriebsaggregatgehäuses 134 zugänglich sind. Die Gruppierung von Untergruppen kann auf der Funktionalität und der Ausgestaltung und/oder den Abmessungen der Komponenten basieren, wobei ähnliche Komponenten, wie z. B. Filterkomponenten, um die leichte Zugänglichkeit und Effizienz bei Wartungsarbeiten zu verbessern, zusammengruppiert und in derselbe Untergruppe aufgenommen sind.

So sind im Antriebsaggregat 112 beispielsweise ein Abgasnachbehandlungssystem 310 und ein Pumpenverteilergetriebe 322 enthalten. Das Abgasnachbehandlungssystem 310 kann die Abgasemissionen der Kraftmaschine 320 regulieren und/oder reinigen, um so die Langlebigkeit der Kraftmaschine 320 und damit auch des Kettenfahrzeugs zu erhöhen. Das Pumpenverteilergetriebe 322 kann eine oder mehrere eingebaute Hydraulikpumpen und einen Ausgang zur Unterstützung bei der Einrichtung und beim Einbau aufweisen. Somit sind das Abgasnachbehandlungssystem 310 und das Pumpenverteilergetriebe 322 wie auch andere Komponenten des Antriebsaggregats 112 so eingerichtet, dass sie die Kraftmaschine 320 unterstützen und zum Ausführen ihrer jeweiligen Funktionen bezüglich der Kraftmaschine 320 positioniert sind.

In einigen Beispielen können Komponenten des Antriebsaggregats 112, bei denen es erforderlich ist, dass sie sich relativ nahe bei der Kraftmaschine 320 befinden, innerhalb des hinteren Teils 150 positioniert sein. So können beispielsweise ein Anlasser 330 und ein Turbolader 328 im hinteren Teil des Fahrzeugs 150 positioniert sein. Andere Komponenten des Antriebsaggregats 112 können weiter von der Kraftmaschine 320 entfernt positioniert sein, beispielsweise in Richtung der ersten seitlichen Seite 170, sodass sie von einer der Vielzahl von Wartungsklappen 136 aus zugänglich sind. Beispielsweise kann ein Lufteinlass 318 mit einem Luftfilter 324 in Richtung der ersten seitlichen Seite 172 positioniert sein, sodass er über eine der Vielzahl von Wartungsklappen 136 zugänglich ist.

Einige Komponenten des Antriebsaggregats 112 können so positioniert und/oder angeordnet sein, dass sie zwsichen anderen Komponenten gekoppelt sind. So kann beispielsweise eine Ladeluftleitung 326 für eine Kopplung von beispielsweise einem Teil des Kühlsystems zur Kraftmaschine 320 sorgen. Somit kann die Ladeluftleitung 326 so ausgelegt sein, dass sie vom seitlichen Teil 152 des Antriebsaggregats 112 zum hinteren Teil 150 verläuft. Als weiteres Beispiel können hydraulische Antriebspumpen 312 und Hydraulikpumpen 314 für das Spannen des Kettenlaufwerks und/oder für den Gebläseantrieb so ausgelegt und angeordnet sein, dass sie mit der Kraftmaschine 320 und anderen Hydrauliksystemkomponenten gekoppelt sind. Zudem kann in dem Antriebsaggregat 112 ein Nebenabtrieb 332 vorhanden sein, um das Koppeln von Zusatzgeräten, wie z. B. Pumpen, an das System zu gestatten.

Ferner können einige Komponenten des Antriebsaggregats 112 innerhalb des Antriebsaggregats 112 und/oder des Antriebsaggregatgehäuses 134 in einer bestimmten vertikalen Höhe angeordnet sein. Beispielsweise kann eine Einlasshaube 316 so positioniert sein, dass sie sich durch das Antriebsaggregatgehäuse 134 erstreckt und/oder als Teil des Gehäuses oberhalb anderer Komponenten des Antriebsaggregats 112 ausgebildet ist.

Als weiteres Beispiel können, wie in Fig. 4 zu sehen, zusätzliche Komponenten des Antriebsaggregats 112 vorhanden sein, einschließlich eines Kühlsystems 410, von Filterpatronen 412, eines Hydraulikölbehälters 414, eines Einfüllstutzens 416 für einen Dieseltank, eines Batteriesystems 418 und eines AUS-32-Behälters 420. In einigen Beispielen können das Kühlsystem 410, die Filterpatronen 412, der Hydraulikölbehälter 414, der Einfüllstutzen 416, das Batteriesystem 418 und der AUS-32-Behälter 420 jeweils von außerhalb des Antriebsaggregatgehäuses 134 über eine entsprechende Wartungsklappe zugänglich sein. Jede dieser Komponenten kann innerhalb des Antriebsaggregats 112 so angeordnet sein, dass sie über die jeweilige Wartungsklappe zugänglich ist. Zum Beispiel können der Hydraulikölbehälter 414 und das Batteriesystem 418 entlang der Längsrichtung vor dem Kühlsystem 410 positioniert sein. Somit können der Hydraulikölbehälter 414 und das Batteriesystem 418 über eine erste Wartungsklappe und das Kühlsystem 410 über eine zweite Wartungsklappe, die in Längsrichtung hinter der ersten Wartungsklappe positioniert ist, zugänglich sein. Somit können routinemäßige Instandhaltungen, einschließlich Ölwechsel, Nachfüllen von Flüssigkeiten, Auswechseln von Komponenten und dergleichen, durch ein Verringern der Komplexität des Zugangs zeit- und kosteneffizienter erfolgen.

In einigen Beispielen können die Komponenten des Antriebsaggregats 112, einschließlich der oben beschriebenen Komponenten, aneinander befestigt sein, sodass sie ein Modul bilden, das als Einheit an das Fahrgestell 126 montiert und von diesem abmontiert werden kann. Darüber hinaus kann in einigen Beispielen jede der Komponenten einzeln aus dem Antriebsaggregat 112 zu Instandhaltung, Wartung und/oder Austausch ausgebaut werden. Die hier beschriebenen Komponenten des Antriebsaggregats 112 können derart angeordnet sein, dass, wie in Fig. 12 näher beschrieben, das vordere Ende 190 des Antriebsaggregats 112 eine geringere Höhe als das rückwärtige Ende 192 des Antriebsaggregats 112 aufweist.

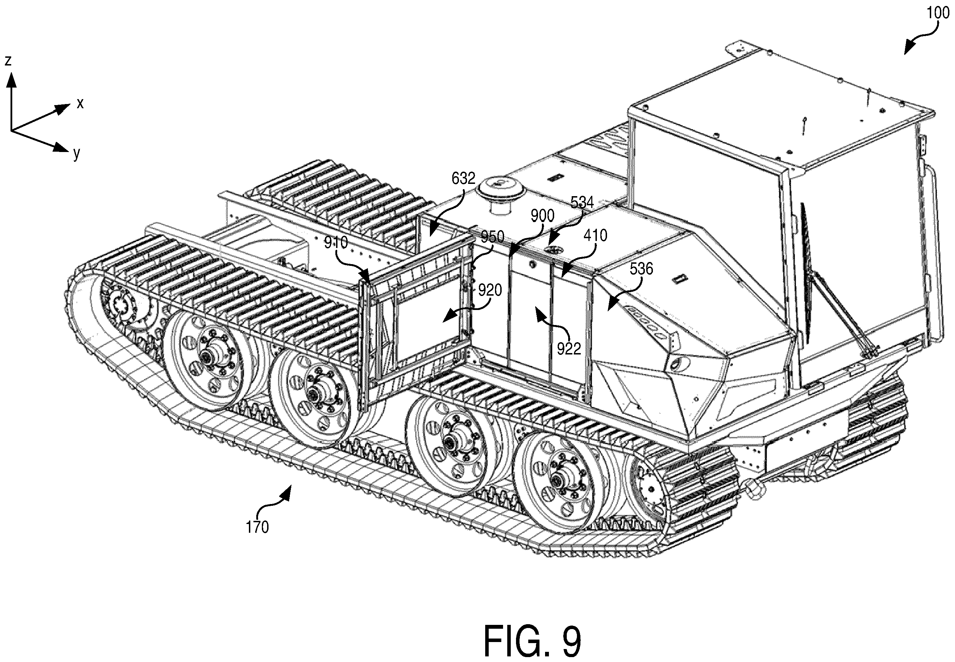

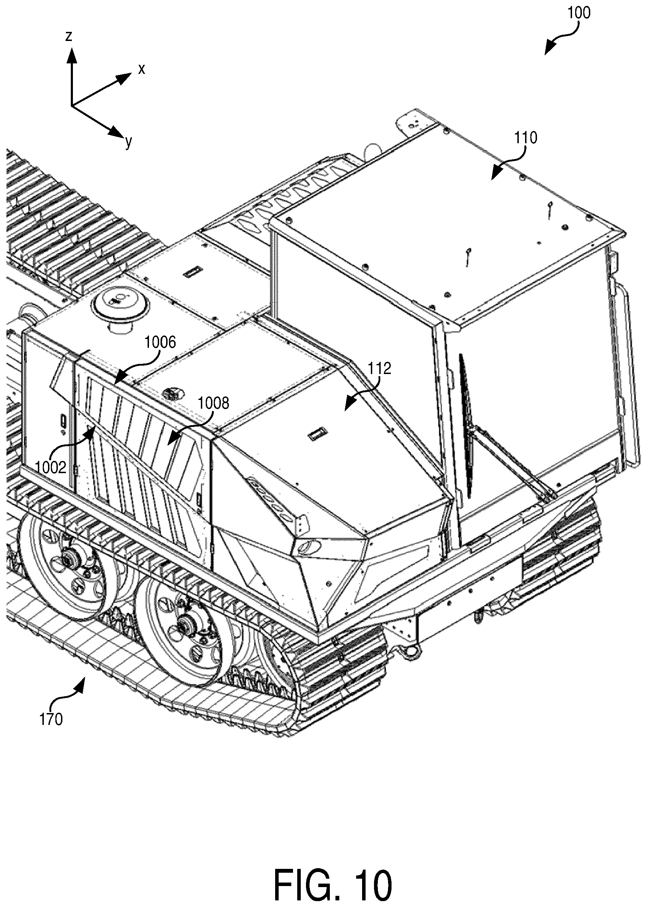

Fig. 5-10 zeigen jeweils mindestens eine der Vielzahl von Wartungsklappen 136. Fig. 5 und 6 zeigen eine erste Wartungsklappe 540, Fig. 7 und 8 eine zweite Wartungsklappe 710 und Fig. 9 und 10 eine dritte Wartungsklappe 910. In einigen Beispielen kann der seitlichen Teil 152 des Antriebsaggregatgehäuses 134 in drei Abschnitte unterteilt sein: einen vorderen Abschnitt 536, einen mittleren Abschnitt 534 und einen rückwärtigen Abschnitt 632. Der vordere Abschnitt 536 kann die erste Wartungsklappe 540, der rückwärtige Abschnitt 632 die zweite Wartungsklappe 710 und der mittlere Abschnitt 534 die dritte Wartungsklappe 910 umfassen. In einigen Beispielen kann die erste Wartungsklappe 540 eine Nachfüllklappe, die zweite Wartungsklappe 710 eine Filterwartungsklappe und die dritte Wartungsklappe 910 eine Kühlsystemwartungsklappe sein.

Die erste Wartungsklappe 540 kann ein Teil des seitlichen Teils 152 des Antriebsaggregatgehäuses 134, der seitlich der Fahrerkabine 110 positioniert ist, sein. Die erste Wartungsklappe 540 kann an der ersten seitlichen Seite 170 des Kettenfahrzeugs 100 in Richtung des vorderen Endes 190 positioniert sein. Die erste Wartungsklappe 540 kann eine Schwenkklappe sein, bei der eine vertikale Kante am rückwärtigen Ende der ersten Wartungsklappe 540 Scharniere 550 umfasst, sodass sich die erste Wartungsklappe 540 vom vorderen Ende 190 weg öffnet. Die erste Wartungsklappe 540 kann den Zugang zu einer ersten Untergruppe 500 von Komponenten des Antriebsaggregats 112 gestatten. Zu der ersten Untergruppe 500 können eine Vielzahl von Einfüllstutzen (z. B. Flüssigkeitseinlässe) und eine Vielzahl von Flüssigkeitsbehältern sowie eine Vielzahl von elektrischen Komponenten gehören. Alle Einfüllstutzen der Vielzahl von Einfüllstutzen können in unmittelbarer Nähe zueinander positioniert sein, wodurch sich die Effizienz des Zugangs während des Nachfüllens erhöht. Durch ein zentrales Anordnen der Nachfüllkomponenten kann die Effizienz weiter erhöht werden, da jede der Nachfüllkomponenten über eine einzige Wartungsklappe (z. B. die erste Wartungsklappe 540) zugänglich ist.

In einigen Beispielen umfasst die erste Untergruppe 500, wie in Fig. 5 dargestellt, den Einfüllstutzen 416 des Dieseltanks, einen Einfüllstutzen 512 des AUS-32-Behälters 420, einen Hydrauliköleinlass 518, einen Starthilfeanschluss 514, einen Wischerflüssigkeitseinlass 516 und den Hydraulikölbehälter 414. In einigen Beispielen enthält der Hydraulikölbehälter 414 ein Schauglas 510, über das der Fahrer den Ölstand im Hydraulikölbehälter 414 prüfen kann, wodurch der Zeitaufwand dafür verringert wird, sich Zugang zum Hydraulikölbehälter 414 selbst zu verschaffen, um festzustellen, ob ein Nachfüllen oder ein Ölwechsel erforderlich ist. Die erste Untergruppe 500 von Komponenten kann Komponenten umfassen, die ein häufige Instandhaltung und/oder einen häufigen Gebrauch erfordern. Das Positionieren der ersten Wartungsklappe 540 in Richtung des vorderen Endes 190 des Kettenfahrzeugs 100 kann einen einfachen Zugang zu der ersten Untergruppe von Komponenten gestatten. Ferner kann die erste Untergruppe 500 von Komponenten so angeordnet sein, dass sie in einen verfügbaren Platz des vorderen Abschnitts 536 des Antriebsaggregatgehäuses 134 passt. Wie in Bezug auf Fig. 12 näher beschrieben wird, kann der vordere Abschnitt 536 zum vorderen Ende 190 des Kettenfahrzeugs hin abfallen, sodass die darin untergebrachte erste Untergruppe 500 von Komponenten so angeordnet sein kann, dass sie in den abfallend ausgeführten verfügbaren Platz passt.

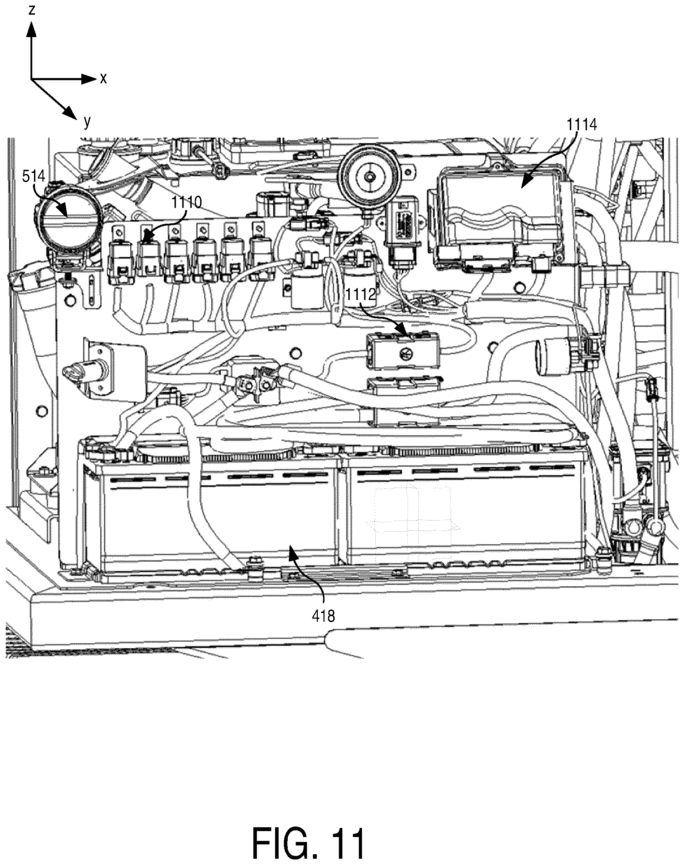

In einigen Beispielen befindet sich zumindest ein Teil der elektrischen Komponenten des Antriebsaggregats 112 in der ersten Untergruppe 500 von Komponenten und ist über die erste Wartungsklappe 540 zugänglich. Zu den elektrischen Komponenten können der Starthilfeanschluss 514 sowie das Batteriesystem 418 gehören. Darüber hinaus können zu den elektrischen Komponenten des Antriebsaggregats 112, wie in Fig. 11 dargestellt, Relais 1110, eine oder mehrere Sicherungen 1112 und eine Steuervorrichtung 1114 gehören. Die erste Wartungsklappe 540 kann einen einfachen Zugang zu allen elektrischen Komponenten des Antriebsaggregats 112 bereitstellen. Ferner kann das Anordnen des Antriebsaggregats 112 derart, dass sich die elektrischen Komponenten in einem einzigen Bereich befinden, den Zeitaufwand für Instandhaltung oder Qualitätskontrollen verringern.

Wie Fig. 5 und 6 weiter zu entnehmen ist, kann die erste Wartungsklappe 540, wie in Fig. 6 gezeigt, als eine unregelmäßige Form aufweisend ausgeführt sein, einschließlich eines Teils 610 der ersten Wartungsklappe 540, der sich bei geschlossener erster Wartungsklappe 540 in einer Querrichtung zur Fahrerkabine 110 hin erstreckt. Der Teil 610 der ersten Wartungsklappe 540 kann ebenfalls abfallend sein, sodass er, wie unten in Bezug auf Fig. 12 näher beschrieben, mit dem abfallenden Winkel eines vorderen Abschnitts des Antriebsaggregatgehäuses 134 übereinstimmt. Ein entsprechender Ausschnitt 620 des Antriebsaggregatgehäuses 134 kann einen in Querrichtung zurückgesetzten Teil 622 aufweisen, der bei geöffneter erster Wartungsklappe 540 die Sichtbarkeit von und den Zugang zu einem Teil der ersten Untergruppe 500 von Komponenten von oben gestatten kann. Durch den zurückgesetzten Teil 622 des Ausschnitts 620 kann sich auch der Raum des Ausschnitts 620 vergrößern, wodurch ein besserer Zugang zu der ersten darin untergebrachten Untergruppe 500 von Komponenten möglich wird.

Wie bereits erwähnt ist die unregelmäßige Form der ersten Wartungsklappe 540 so ausgelegt, dass bei geschlossener erster Wartungsklappe 540 der Ausschnitt 620, einschließlich des zurückgesetzten Teils 622, vollständig abdeckt wird. Der zurückgesetzte Teil 622 kann eine erste Breite 624 aufweisen. Eine zweite Breite 626 des Teils 610 der ersten Wartungsklappe 540 kann gleich der oder größer als die erste Breite 624 sein, sodass die erste Wartungsklappe 540 den zurückgesetzten Teil 622 des Ausschnitts 620 vollständig abdeckt. Somit ist die erste Untergruppe 500 von Komponenten während des Betriebs des Kettenfahrzeugs 100 abgedeckt. Ferner kann durch die unregelmäßige Form mit einer dreidimensionalen Ausgestaltung, die den Teil 610 einschließt, die erste Wartungsklappe 540 verstärkt werden.

Durch den durch den Ausschnitt 620 ermöglichten Zugang von oben kann das Nachfüllen von Flüssigkeiten bei Komponenten wie dem Hydraulikölbehälter 414 über den Hydrauliköleinlass 518 einfacher und schneller erfolgen. In einigen Beispielen kann die erste Untergruppe 500 von Komponenten, die von der ersten Wartungsklappe 540 aus zugänglich ist, so angeordnet sein, dass Einlässe, Einfüllstutzen und dergleichen, die das Nachfüllen von Flüssigkeit, den Flüssigkeitswechsel und dergleichen gestatten, bei geöffneter erster Wartungsklappe 540 zugänglich sind. Der Einfüllstutzen 512 des AUS-32-Behälters 420 und der Hydrauliköleinlass 518 des Hydraulikölbehälters 414 weisen beispielsweise beide nach außen (z. B. von der Fahrerkabine 110 weg), sodass sie bei geöffneter erster Wartungsklappe 540 zugänglich sind.

In Fig. 7 und 8 ist die zweite Wartungsklappe 710 dargestellt. Die zweite Wartungsklappe 710 kann von der ersten Wartungsklappe 540 beabstandet sein, hinter der ersten Wartungsklappe 540 und der Fahrerkabine 110 positioniert sein und, wie weiter unten beschrieben, von der ersten Wartungsklappe 540 durch eine dritte Wartungsklappe getrennt sein. Die zweite Wartungsklappe 710 kann den Zugang zu einer zweiten Untergruppe 700 von Komponenten des Antriebsaggregats 112 gestatten. In einigen Beispielen umfasst die zweite Untergruppe 700 Filterelemente und externe Stromanschlüsse. Die zweite Wartungsklappe 710 kann, wie in Fig. 7 dargestellt, als Teil des seitlichen Teils 152 des Antriebsaggregatgehäuses 134 an der ersten seitlichen Seite 170 des Kettenfahrzeugs 100 in Richtung des rückwärtigen Endes 192 des Antriebsaggregats 112 positioniert sein. Die zweite Wartungsklappe 710 kann als eine im Wesentlichen flache Klappe ausgeführt sein, die im geschlossenen Zustand mit einer äußeren flachen Oberfläche der ersten seitlichen Seite 170 des Antriebsaggregatgehäuses 134 fluchtet. Ähnlich wie die erste Wartungsklappe 540 kann die zweite Wartungsklappe 710 eine Schwenkklappe sein, wobei die Scharniere 832 entlang einer vertikalen Kante der zweiten Wartungsklappe 710 in Richtung des rückwärtigen Endes des Antriebsaggregatgehäuses 134 positioniert sind, sodass sich die zweite Wartungsklappe 710 vom vorderen Ende 190 weg öffnet.

In einigen Beispielen umfasst die zweite Untergruppe 700 eine Vielzahl von Filterkomponenten. Die zweite Untergruppe 700 kann basierend auf Funktionalität und Ausgestaltung so gruppiert sein, dass die darin enthaltenen Komponenten angeordnet sind, um die Kraftmaschine 320 und/oder andere Komponenten wie das Hydrauliksystem zu unterstützen. Durch das Zusammengruppieren von Filterkomponenten kann der Austausch und/oder der Ersatz von Komponenten während der Wartung erleichtert werden. Bei den Komponenten der zweiten Untergruppe 700 kann es sich um Filterkomponenten, bei denen regelmäßige Instandhaltung, Wartung und/oder Austausch erforderlich ist, wie z. B. ein Luftfilter 810, ein Kraftstoffvorfilter 814 und ein Motorölfilter 820, sowie einen Motorölmessstab 812 und einen externen elektrischen Anschluss 818 handeln. Ein Wasserabscheider 816 kann mit dem Kraftstoffvorfilter 814 gekoppelt und daher in der zweiten Untergruppe 700 enthalten sein. Ähnlich wie bei der ersten Untergruppe 500 von Komponenten, die unter Bezugnahme auf die Fig. 5 und 6 erörtert wurde, kann die zweite Untergruppe 700 von Komponenten so angeordnet sein, dass die Zugangsstellen für jede Komponente der zweiten Untergruppe 700 von Komponenten nach außen (z. B. in Richtung der ersten seitlichen Seite 170) gerichtet sind, was die Zugänglichkeit für den Fahrer oder einen Techniker während Instandhaltungsarbeiten verbessert.

Die dritte Wartungsklappe 910 kann, wie in Fig. 9 dargestellt, zwischen der ersten Wartungsklappe 540 und der zweiten Wartungsklappe 710 positioniert sein. Die dritte Wartungsklappe 910 überlappt die erste Wartungsklappe 540 und die zweite Wartungsklappe 710 möglicherweise nicht. Somit kann jede von der ersten, zweiten und dritten Wartungsklappe unabhängig von den anderen Wartungsklappen geöffnet werden. Ähnlich wie die zweite Wartungsklappe 710 kann die dritte Wartungsklappe 910 als flache Schwenkklappe mit Scharnieren 950 ausgeführt sein, die an einer vertikalen Kante positioniert sind, die sich zum rückwärtigen Ende 192 der dritten Wartungsklappe 910 hin befindet, sodass sich die dritte Wartungsklappe 910 vom vorderen Ende 190 weg öffnet.

Die dritte Wartungsklappe 910 kann den Zugang zu einer dritten Untergruppe 900 von Komponenten des Antriebsaggregats 112 gestatten. Die dritte Untergruppe 900 von Komponenten kann eine oder mehrere Kühlsystemkomponenten umfassen. Ein Kondensator 920 des Kühlsystems 410 kann fest an einer Innenfläche der dritten Wartungsklappe 910 angebracht sein, sodass der Kondensator 920 bei geöffneter dritter Wartungsklappe 910 von einem Kombikühler 922 getrennt ist. Der Kombikühler 922 kann in einigen Beispielen an der ersten seitlichen Seite 170 einer oder mehrerer anderer Komponenten des Antriebsaggregats 112 positioniert sein, die entweder das Kühlsystem 410 unterstützen oder ein Teil davon sind oder unabhängig vom Kühlsystem 410 sind. Der Kombikühler 922 kann einen Hydraulikkühler 924, einen Wasserkühler 926 und einen Ladeluftkühler 928 umfassen, die jeweils mit verschiedenen Komponenten des Antriebsaggregats 112 gekoppelt sein können. Der Ladeluftkühler 928 kann beispielsweise direkt mit Sitzluftleitung 326 gekoppelt sein, während der Hydraulikkühler 924 mit einer oder mehreren Komponenten des Hydrauliksystems gekoppelt sein kann. Wenn die dritte Wartungsklappe 910 geöffnet und der Kondensator 920 vom Kombikühler 922 getrennt ist, kann der Kombikühler 922 eine äußerste Komponente der dritten Untergruppe 900 von Komponenten sein. Somit kann die leichte Zugänglichkeit sowohl zu dem Kondensator 920 als auch zu dem Kombikühler 922 erhöht werden.

Ein äußerer Teil 1002 der dritten Wartungsklappe 910 umfasst, wie in Fig. 10 zu sehen, eine Vielzahl von Rippen 1008 (z. B. Schlitze) einer perforierten Platte 1006. Durch die Vielzahl der Rippen 1008 der perforierten Platte 1006 kann die Fläche der perforierten Platte 1006 vergrößert werden. Infolge der vergrößerten Fläche erhöht sich ein Anteil der offenen Oberfläche der dritten Wartungsklappe 910, wodurch bei geschlossener dritter Wartungsklappe 910 der Widerstand für einen Luftvolumenstrom eines Lüfters des Kühlsystems 410 verringert wird. Somit kann die dritte Untergruppe 900 Komponenten umfassen, die einen Luftstrom benötigen, da die perforierte Platte einen erhöhten Luftstrom in und aus dem mittleren Abschnitt 534 gestattet.

Wie bereits erwähnt, kann, da sich die Klappen nicht gegenseitig überlappen, jede Klappe der Vielzahl von Wartungsklappen 136, einschließlich der ersten Wartungsklappe 540, der zweiten Wartungsklappe 710 und der dritten Wartungsklappe 910, unabhängig von den anderen Klappen der Vielzahl von Wartungsklappen 136 geöffnet werden. So ist beispielsweise jede Kombination von offenen und geschlossenen Klappen der ersten, zweiten und dritten Wartungsklappe denkbar. Somit können mehrere Instandhaltungs- und/oder Wartungsarbeiten gleichzeitig stattfinden, was den Zeitaufwand für die Instandhaltungs- und/oder Wartungsarbeiten verringert und die Effizienz erhöht.

Bei jeder der Vielzahl von Wartungsklappen 136 kann es sich um sich verriegelnde Klappen handeln, die im geschlossenen Zustand arretiert sind, um das Risko, dass sich die Klappen während des Betriebs des Kettenfahrzeugs 100 öffnen, zu verringern. Durch das Öffnen eines Riegels, z. B. des Riegels 830 der zweiten Wartungsklappe 710, kann die entsprechende Klappe entriegelt werden, sodass die Klappe für einen Zugang zu einer jeweiligen Untergruppe der darin befindlichen Komponenten aufgeschwenkt werden kann. In einigen Beispielen kann der Riegel 830 ein manueller Riegel sein, z. B. ein Zungenverschluss, oder ein automatischer Riegel, der beim Schließen automatisch einrastet, z. B. ein Zuschlagschloss.

In der in den Figuren gezeigten Ausführungsform ist jede der Vielzahl von Wartungsklappen 136 an der ersten seitlichen Seite 170 des Antriebsaggregatgehäuses 134 positioniert, sodass der hintere Teil 150 des Antriebsaggregatgehäuses 134 keine Wartungsklappen umfasst. Somit kann die Arbeitsgerätschaft 230, wie in Fig. 2 dargestellt, auf das Fahrgestell 126 hinter (z. B. hinter dem rückwärtigen Ende 192) der Fahrerkabine 110 montiert werden, ohne den Zugang zu einer der Vielzahl von Wartungsklappen 136 zu behindern.

Dabei kann jedoch in anderen Ausführungsformen die Vielzahl der Wartungsklappen 136 neben der ersten Wartungsklappe 540, der zweiten Wartungsklappe 710 und der dritten Wartungsklappe 910 noch andere Wartungsklappen aufweisen. So können beispielsweise zusätzliche Wartungsklappen als Teil des hinteren Teils 150 des Antriebsaggregatgehäuses 134 an der zweiten seitlichen Seite 172 vorhanden sein, um Zugang zu Komponenten wie dem Abgasnachbehandlungssystem 310 und/oder der Kraftmaschine 320 zu erhalten.

In Fig. 12 ist eine Seitenansicht des Kettenfahrzeugs 100 dargestellt, die die erste seitliche Seite 170 des Kettenfahrzeugs 100 zeigt. Wie bereits erwähnt, kann der seitliche Teil 152 des Antriebsaggregatgehäuses 134 in den vorderen Abschnitt 536, den mittleren Abschnitt 534 und den rückwärtigen Abschnitt 632 unterteilt sein. Der vordere Abschnitt 536 kann die erste Wartungsklappe 540, der mittlere Abschnitt 534 die dritte Wartungsklappe 910 und der rückwärtige Abschnitt 632 die zweite Wartungsklappe 710 umfassen.

Der mittlere und der rückwärtige Abschnitt 534, 632 des Antriebsaggregatgehäuses 134 können beide eine (von der Bodenoberfläche aus gemessene) erste Höhe 1210 aufweisen. Der vordere Abschnitt 536 kann mit einem Winkel A abfallen, sodass das rückwärtige Ende 192 des vorderen Abschnitts 536 die erste Höhe 1210 aufweist, während das vordere Ende 190 des vorderen Abschnitts 536 eine (ebenfalls von der Bodenoberfläche aus gemessene) zweite Höhe 1212 aufweist, wobei die zweite Höhe 1212 geringer als die erste Höhe 1210 ist. Wie bereits erwähnt, können die Komponenten der ersten Untergruppes 500 in der ersten Untergruppe 500 mit einer Anordnung enthalten sein, die der nach unten geneigten Ausgestaltung des vorderen Abschnitts 536 entspricht. Beispielsweise kann das Batteriesystem 418 vor dem Hydraulikölbehälter 414 (z. B. näher am vorderen Ende 190) positioniert sein, da das Batteriesystem 418 ein kleineres Packmaß als der Hydraulikölbehälter 414 hat und daher in das kleinere vordere Ende des vorderen Abschnitts 536 passen kann.

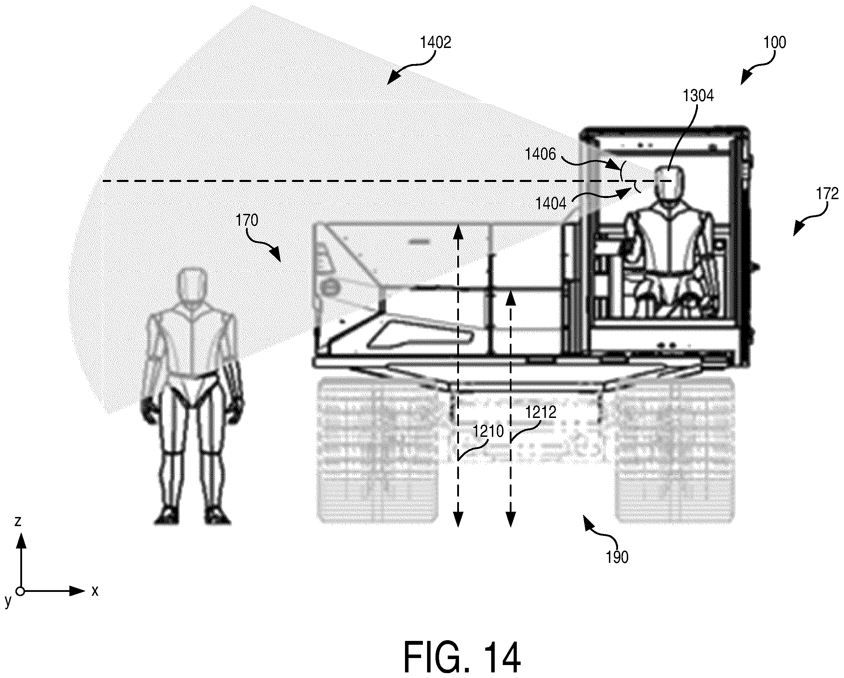

Durch den Winkel A des vorderen Abschnitts 536 des Antriebsaggregatgehäuses 134 kann sich eine Größe der ersten seitlichen Seite 170 der seitlichen Teile 133 der Windschutzscheibe 130 der Fahrerkabine 110 im Vergleich zu dem Fall, dass der vordere Abschnitt 536 sowohl am hinteren als auch am vorderen Ende die erste Höhe 1210 aufweist, vergrößern. Die vergrößerte Größe der ersten seitlichen Seite 170 der seitlich gewandten Teile 133 kann, wie aus den Fig. 13A und 14 zu entnehmen ist, ein vergrößertes Sichtfeld des in der Fahrerkabine 110 sitzenden Fahrers ermöglichen.

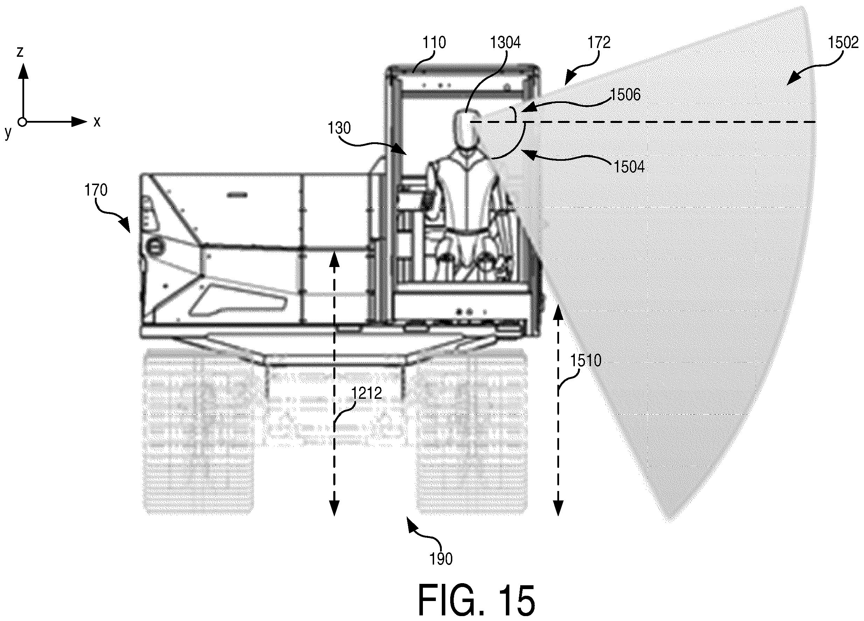

In den Fig. 13A-15 sind verschiedene Perspektiven des Sichtfelds des Fahrers 1304 des Kettenfahrzeugs 100 dargestellt. Fig. 13A zeigt insbesondere ein nach vorn gewandtes Sichtfeld 1302 von der ersten seitlichen Seite 170 aus; Fig. 13B zeigt insbesondere das nach vorn gewandte Sichtfeld 1302 von der zweiten seitlichen Seite 172 aus; Fig. 14 zeigt ein erstes seitliches Sichtfeld 1402 vom vorderen Ende 190 des Kettenfahrzeugs 100 aus; und Fig. 15 zeigt ein zweites seitliches Sichtfeld 1502 vom vorderen Ende 190 des Kettenfahrzeugs 100 aus. Wie Fig. 13A und 13B weiter zu entnehmen ist kann die Fahrerkabine 110 einen einzigen Fahrersitz 1310 für den Fahrer 1304 umfassen.

Das nach vorn gewandte Sichtfeld 1302 kann sich über eine Tiefe erstrecken, die auf einer Tiefe des nach vorn gewandten Teils 132 der Windschutzscheibe 130 basiert. Die Unterkante des nach vorn gewandten Teils 132 der Windschutzscheibe 130 kann sich, wie in Bezug auf Fig. 1 beschrieben, bis zur Höhe 180 über dem Boden erstrecken. Die Höhe 180 kann geringer als die zweite Höhe 1212 sein, sodass die Unterkante des nach vorn gewandten Teils der Windschutzscheibe 130 näher am Boden liegt als die Oberseite des vorderen Abschnitts 536 des Antriebsaggregatgehäuses 134. Dadurch, dass die Höhe 180 der Unterkante des nach vorn gewandten Teil 132 niedriger als die Oberseite des vorderen Abschnitts des Antriebsaggregatgehäuses 134 ist, ist ein größerer Tiefenwinkel 1306 des nach vorn gewandten Sichtfeldes 1302 möglich. Eine Vergrößerung des Tiefenwinkels 1306 kann ein größeres, nach vorn gewandtes Sichtfeld gestatten, wodurch eine Sichtbarkeit von mehr vor dem Kettenfahrzeug 100 befindlichen Objekten, Personen, Gelände und/oder dergleichen gestattet wird.

Der Aufwärtswinkel 1308 des nach vorn gewandten Sichtfelds 1302 kann von der Höhe der Fahrerkabine 110 im Vergleich zur Höhe des in der Fahrerkabine 110 sitzenden Fahrers 1304 abhängen. In einigen Beispielen kann sich die zweite seitliche Seite 172 des nach vorn gewandten Sichtfelds 1302 nach unten bis zu einer Höhe erstrecken, die, da sich auf der ersten seitlichen Seite 170 der Fahrerkabine 110 das Antriebsaggregatgehäuse 134 auf dem Fahrgestell 126 befindet, niedriger als die erste seitliche Seite 170 des nach vorn gewandten Sichtfelds 1302 ist. Dies wird in Fig. 13A und 13B dadurch veranschaulicht, dass sich eine Person 1312 mehr im nach vorn gewandten Sichtfeld 1302 befindet, das von der zweiten seitlichen Seite 172 aus gesehen wird, als in dem, das von der ersten seitlichen Seite 170 aus gesehen wird.

In Fig. 14 ist das erste seitliche Sichtfeld 1402 dargestellt. Das erste seitliche Sichtfeld 1402 kann ein peripheres Sichtfeld des Fahrers 1304 in Richtung der ersten seitlichen Seite 170 (z. B. der rechten Seite) sein. Ähnlich wie in Bezug auf das nach vorn gewandte Sichtfeld 1302 beschrieben, kann ein Tiefenwinkel 1404 des ersten seitlichen Sichtfeldes 1402 von der zweiten Höhe 1212 des vorderen Endes 190 des vorderen Abschnitts 536 des Antriebsaggregatgehäuses 134 und dem Winkel A, mit dem der vordere Abschnitt 536 abfällt, abhängen. Der seitlich gewandte Teil 133 der Windschutzscheibe 130 an der ersten seitlichen Seite ist so ausgeführt, dass er zu dem Winkel A ausgerichtet ist, sodass das erste seitliche Sichtfeld 1402 vom Winkel A abhangt. Ein Aufwärtswinkel 1406 des ersten seitlichen Sichtfelds 1402 kann von der Höhe der Fahrerkabine 110 im Vergleich zur Höhe des Fahrers 1304 abhängen.

Der Tiefenwinkel 1404 kann sich dadurch, dass die zweite Höhe 1212 niedriger als die erste Höhe 1210 ist, vergrößern, wodurch sich das erste seitliche Sichtfeld 1402 vergrößert. Die vergrößerte Größe des ersten seitlichen Sichtfeldes 1402 kann eine Sichtbarkeit von mehr Objekten, Personen, Gelände und/oder dergleichen auf der ersten seitlichen Seite 170 des Kettenfahrzeugs 100 gestatten.

In Fig. 15 ist das zweite seitliche Sichtfeld 1502 dargestellt. Das zweite seitliche Sichtfeld 1502 kann ein peripheres Sichtfeld des Fahrers 1304 in Richtung der zweiten seitlichen Seite 172 (z. B. der linken Seite) sein. Ähnlich wie in Bezug auf das nach vorn gewandte Sichtfeld 1302 beschrieben, kann der Tiefenwinkel 1504 des zweiten seitlichen Sichtfelds 1502 von einer Höhe 1510 der zweiten seitlichen Seite 172 des seitlich gewandten Teils 133 der Windschutzscheibe 130 abhängen. Die Höhe 1510 kann niedriger als die zweite Höhe 1212 sein, wodurch sich die Gesamtgröße des zweiten seitlichen Sichtfeldes 1502 vergrößern kann und damit eine bessere periphere Sichtbarkeit gestattet. Der Aufwärtswinkel 1506 des zweiten seitlichen Sichtfeldes 1502 kann von der Höhe der Fahrerkabine 110 im Vergleich zur Höhe des Fahrers 1304 abhängen.

Eine technische Wirkung der hier beschriebenen Systeme des Kettenfahrzeugs besteht darin, dass die Effizienz und die leichte Zugänglichkeit zu den Komponenten des Antriebsaggregats durch die Vielzahl von Wartungsklappen verbessert wird. Jede der Vielzahl von Wartungsklappen gestattet den Zugang zu einer jeweiligen Untergruppe von Komponenten des Antriebsaggregats und die jeweiligen Untergruppen von Komponenten sind so angeordnet, dass sie über eine entsprechende Wartungsklappe zugänglich sind. Ferner gestattet eine unregelmäßige Form einer ersten Wartungsklappe und eines entsprechenden Ausschnitts in einem Antriebsaggregatgehäuse, wobei der Ausschnitt einen entlang einer Querrichtung zurückgesetzten Abschnitt aufweist und die erste Wartungsklappe einen Abschnitt umfasst, der die zurückgesetzten Teile vollständig abdeckt, den Zugang zu einer ersten Untergruppe von Komponenten von oben. Darüber hinaus erlaubt ein abfallender Winkel eines vorderen Abschnitts des Antriebsaggregatgehäuses eine Vergrößerung einer seitlich gewandten Windschutzscheibe einer Fahrerkabine, wodurch sich wiederum das Sichtfeld des Fahrers vergrößert, was eine bessere Sichtbarkeit von Personen, Objekten und Gelände gestattet, auf die das Kettenfahrzeug treffen kann.

Die folgenden Ansprüche weisen insbesondere auf bestimmte Kombinationen und Unterkombinationen hin, die als neuartig und nicht naheliegend angesehen werden. Diese Ansprüche können sich auf "ein" Element oder "ein erstes" Element oder das Äquivalent davon beziehen. Solche Ansprüche sind so zu verstehen, dass sie eines oder mehrerer solcher Elemente zum Bestandteil haben und dabei zwei oder mehrere solcher Elemente weder verlangen noch ausschließen. Andere Kombinationen und Unterkombinationen der offenbarten Merkmale, Funktionen, Elemente und/oder Eigenschaften können durch Änderung der vorliegenden Ansprüche oder durch Vorlage neuer Ansprüche in dieser oder einer verwandten Anmeldung beansprucht werden. Solche Ansprüche werden, ob sie nun breiter, enger, gleich oder anders abgefasst sind als die ursprünglichen Ansprüche, ebenfalls als zum Gegenstand der vorliegenden Offenbarung gehörig betrachtet.

## Patentansprüche

1. Kettenfahrzeug, umfassend:
ein Fahrgestell, das sich entlang einer Längsrichtung des Kettenfahrzeugs erstreckt, wobei das Fahrgestell eine Mehrzahl von Rahmenteilen umfasst, die sich entlang der Längsrichtung erstrecken;
eine mit dem Fahrgestell gekoppelte Fahrerkabine;
ein Antriebsaggregat, das eine Kraftmaschine umfasst, die in einem Antriebsaggregatgehäuse untergebracht ist, das wenigstens eine Wartungsklappe aufweist, wobei das Antriebsaggregatgehäuse einen - auf eine normale Fahrtrichtung des Kettenfahrzeugs bezogen- seitlichen Teil und einen hinteren Teil aufweist; und
ein Paar von mit der Kraftmaschine in einer Antriebsbeziehung stehenden Kettenlaufwerkbaugruppen, wobei jede Kettenlaufwerkbaugruppe eine um eine Mehrzahl von Rädern herumgelegte Endloskette umfasst; **dadurch gekennzeichnet, dass** das Antriebsaggregat mehrere Funktionskomponenten aufweist, die nach Art ihrer Funktion als wenigstens eine Untergruppe gruppenweise kompakt zueinander angeordnet sind, und dass die wenigstens eine Wartungsklappe so ausgelegt ist, dass sie den Zugang zu der jeweiligen Untergruppe von Funktionskomponenten des Antriebsaggregats gestattet.

2. Kettenfahrzeug nach Anspruch 1, **dadurch gekennzeichnet, dass** eine erste Untergruppe eine Mehrzahl von Nachfüllkomponenten für Betriebsmittel des Antriebsaggregates und/oder eine Mehrzahl von elektrischen Komponenten umfasst;
und/oder eine zweite Untergruppe eine Mehrzahl von Filterkomponenten und vorzugsweise einen externen elektrischen Anschluss umfasst;
und/oder eine dritte Untergruppe eine oder mehrere Kühlsystemkomponenten umfasst.

3. Kettenfahrzeug nach Anspruch 1 oder 2, **dadurch gekennzeichnet, dass** der seitliche Teil des Antriebsaggregatgehäuses seitlich neben der Fahrerkabine positioniert ist und einen vorderen Abschnitt, einen rückwärtigen Abschnitt und einen mittleren, zwischen dem vorderen Abschnitt und dem rückwärtigen Abschnitt positionierten Abschnitt umfasst, wobei ein vorderes Ende des vorderen Abschnitts zu dem vorderen Ende der Fahrerkabine ausgerichtet ist und der rückwärtige Abschnitt seitlich des hinteren Teils des Antriebsaggregatgehäuses positioniert ist.

4. Kettenfahrzeug nach Anspruch 3, **dadurch gekennzeichnet, dass** der vordere Abschnitt eine erste Wartungsklappe, der rückwärtige Abschnitt eine zweite Wartungsklappe und der mittlere Abschnitt eine dritte Wartungsklappe umfassen, wobei:
die erste Wartungsklappe durch die dritte Wartungsklappe von der zweiten Wartungsklappe beabstandet ist;
die erste, zweite und dritte Wartungsklappe sich in Längsrichtung des Kettenfahrzeugs nicht überlappen; und
jede Klappe der Vielzahl von Wartungsklappen an Scharnieren befestigt ist und so ausgeführt ist, dass sie sich vom vorderen Ende des Kettenfahrzeugs weg öffnet.

5. Kettenfahrzeug nach einem der vorhergehenden Ansprüche, **dadurch gekennzeichnet, dass** die erste Wartungsklappe so ausgeführt ist, dass sie den Zugang zu einer ersten Untergruppe von Funktionskomponenten des Antriebsaggregates gestattet, die zweite Wartungsklappe so ausgeführt ist, dass sie den Zugang zu einer zweiten Untergruppe von Funktionskomponenten des Antriebsaggregates gestattet, und die dritte Wartungsklappe so ausgeführt ist, dass sie den Zugang zu einer dritten Untergruppe von Funktionskomponenten des Antriebsaggregates gestattet, wobei:
jede Gruppe von der ersten, zweiten und dritten Untergruppe für den Zugang über die erste Seite des Kettenfahrzeugs angeordnet ist, wenn eine entsprechende Wartungsklappe geöffnet ist.

6. Kettenfahrzeug nach einem der vorhergehenden Ansprüche, **dadurch gekennzeichnet, dass** eine Außenwand der dritten Wartungsklappe mit Öffnungen versehen ist, die so ausgeführt sind, dass sie einen Luftstrom durch sie hindurch gestatten, und dass insbesondere ein Kondensator eines Kühlsystems fest an einer Innenfläche der dritten Wartungsklappe angebracht ist.

7. Kettenfahrzeug nach dem Oberbegriff des Anspruchs 1 oder nach einem der vorhergehenden Ansprüche, **dadurch gekennzeichnet, dass** ein vorderer Abschnitt eines seitlichen Teils des Antriebsaggregatgehäuses mit einer nach vorne und/oder zur Seite hin abfallenden Oberseite versehen ist, und dass die Fahrerkabine einen nach vorn gerichteten Sichtscheibenteil und eine Mehrzahl von seitlich gerichteten Sichtscheibenteilen umfasst, wobei ein erster seitlich gewandter Sichtscheibenteil, der an der ersten Seite der Fahrerkabine positioniert ist, so ausgeführt ist, dass er zu der abfallenden Oberseite des vorderen Abschnitts des Antriebsaggregatgehäuses ausgerichtet ist.

8. Kettenfahrzeug nach einem der vorhergehenden Ansprüche, **dadurch gekennzeichnet, dass** die Wartungsklappe eine dreidimensionale Form ausweist und derart an dem Abschnitt des Antriebsaggregatgehäuses angelenkt ist, dass bei einem Öffnen der Wartungsklappe ein Zugang von oben her auf in dem vorderen Abschnitt des Antriebsaggregatgehäuses gruppierte Funktionskomponenten ermöglicht ist.

9. Kettenfahrzeug nach Anspruch 8, **dadurch gekennzeichnet, dass** ein zurückgesetzter Teil eines durch die dreidimensionale Wartungsklappe verdeckten Ausschnitts des vorderen Abschnitts des Antriebsaggregatgehäuses so gestaltet ist, dass ein Zugang zu mindestens einem Teil einer Untergruppe von Funktionskomponenten des Antriebsaggregatgehäuses von oben ermöglicht ist.

10. Kettenfahrzeug, umfassend:
ein Fahrgestell, das sich entlang einer Längsrichtung des Kettenfahrzeugs erstreckt, wobei das Fahrgestell eine Mehrzahl von Rahmenelementen umfasst, die sich entlang der Längsrichtung erstrecken;
eine auf das Fahrgestell montierte Fahrerkabine;
ein eine Kraftmaschine umfassendes Antriebsaggregat, das auf das Fahrgestell hinter und an einer ersten Seite der Fahrerkabine montiert ist, wobei das Antriebsaggregat in einem Gehäuse untergebracht ist; und
ein Paar von Kettenlaufwerkbaugruppen, die über die Mehrzahl von Rahmenelementen mit dem Fahrgestell gekoppelt sind, wobei jede Kettenlaufwerkbaugruppe des Paars von Kettenlaufwerkbaugruppen eine um eine Mehrzahl von Rädern herum gelegte Endloskette umfasst, wobei die Mehrzahl von Rädern ein Antriebsrad, das von einem Spannrad beabstandet ist, und eine Mehrzahl von Laufrädern, die zwischen dem Antriebsrad und dem Spannrad positioniert sind, umfasst, wobei:
das Gehäuse eine Mehrzahl von Wartungsklappen umfasst, einschließlich einer Nachfüllklappe, einer Filterwartungsklappe und einer Kühlsystemwartungsklappe, die jeweils so ausgeführt sind, dass sie den Zugang zu einer jeweiligen Untergruppe von Funktionskomponenten des Antriebsaggregats gestatten; und
ein vorderer Abschnitt des Gehäuses einen abfallenden Winkel aufweisend ausgeführt ist.

11. Kettenfahrzeug nach Anspruch 10, wobei die Nachfüllklappe so ausgeführt ist, dass sie den Zugang zu einer ersten Untergruppe von Komponenten des Antriebsaggregats gestattet, wobei die erste Untergruppe eine Vielzahl von Einfüllstutzen für verschiedene Flüssigkeitsbehälter umfasst, wobei die erste Untergruppe von Komponenten so ausgeführt ist, dass sie in den vorderen Abschnitt des Gehäuses passt.

12. Kettenfahrzeug nach Anspruch 10, wobei die Nachfüllklappe zu dem vorderen Abschnitt des Gehäuses, die Filterwartungsklappe zu einem rückwärtigen Abschnitt des Gehäuses und die Kühlsystemwartungsklappe zu einem mittleren Abschnitt des Gehäuses gehört, wobei sich die Nachfüllklappe, die Filterwartungsklappe und die Kühlsystemwartungsklappe nicht überlappen.

13. Kettenfahrzeug nach Anspruch 11, wobei die erste Untergruppe von Komponenten des Antriebsaggregats ferner eine Vielzahl von elektrischen Komponenten umfasst und der vordere Abschnitt des Gehäuses einen Ausschnitt mit einem zurückgesetzten Teil umfasst, der so ausgeführt ist, dass er zu mindestens einem Teil der ersten Untergruppe von Komponenten einen Zugang von oben gestattet.

14. Kettenfahrzeug nach Anspruch 10, wobei die Filterwartungsklappe so ausgeführt ist, dass sie den Zugang zu einer zweiten Untergruppe von Komponenten des Antriebsaggregats gestattet, und die Kühlsystemwartungsklappe so ausgeführt ist, dass sie den Zugang zu einer dritten Untergruppe von Komponenten gestattet, wobei die zweite Untergruppe eine Vielzahl von Filtern umfasst und die dritte Untergruppe eine oder mehrere Kühlsystemkomponenten umfasst.

15. Kettenfahrzeug nach Anspruch 10, wobei die Fahrerkabine eine Windschutzscheibe und einen Fahrersitz mit einer einzigen Sitzposition umfasst, wobei die Windschutzscheibe einen nach vorn gewandten Teil und eine Mehrzahl von seitlich gewandten Teilen umfasst, wobei ein erster seitlich gewandter Teil, der an der ersten Seite angeordnet ist, so ausgeführt ist, dass er zu dem abfallenden Winkel des vorderen Abschnitts des Gehäuses des Antriebsaggregats ausgerichtet ist.
